# EUROPEAN PATENT SPECIFICATION

(11) **EP 4 608 629 B1**
(45) Date of publication and mention of the grant of the patent: **23.09.2026**
(21) Application number: 23814270.7
(22) Date of filing: 25.10.2023
(51) Int. Cl.: B29C 45/26, B29C 45/33, B29C 45/67, B29C 45/73, B29C 45/80, B29C 45/66

(54) **PRESS COMPRISING A HOT RUNNER MOLD WITH HIGH THERMAL EFFICIENCY AND METHOD FOR INCREASING THE THERMAL EFFICIENCY OF A HOT RUNNER MOLD**
SPRITZGUSSMASCHINE MIT HEISSKANALFORM MIT HOHEM WÄRMEWIRKUNGSGRAD UND VERFAHREN ZUR ERHÖHUNG DER WÄRMEEFFIZIENZ EINER HEISSKANALFORM
PRESSE COMPRENANT UN MOULE À CANAL CHAUD À HAUT RENDEMENT THERMIQUE ET PROCÉDÉ POUR AUGMENTER LE RENDEMENT THERMIQUE D'UN MOULE À CANAL CHAUD

(30) Priority: 27.10.2022 IT 202200022203
(43) Date of publication of application: 03.09.2025
(73) Proprietor: Ergotech S.r.l., 10010 Settimo Vittone (TO) (IT)
(72) Inventor: DINI, Maurizio, 10010 Settimo Vittone (IT); TORASSA, Massimo, 10010 Settimo Vittone (IT)
(86) International application number: PCT/IT2023/050241
(87) International publication number: WO 2024/089721

(56) References cited:
- CN-A- 102 320 114
- FR-A1- 2 937 578
- US-A- 4 867 668

## Description

### Field of the invention

The present invention relates in general to the field of plastic injection molding, particularly to a press in accordance to claim 1, a press in accordance to claim 7 and to a method in accordance to claim 9, and more particularly it relates to a new and innovative system for moving the plates and in general the parts forming and constituting a mold, of the hot runner type, for injection molding of plastic material, wherein this moving system allows a significant improvement and increase of the overall thermal efficiency of the mold, this meaning a series of innovative, improved and advantageous performances connected and associated with an optimal and efficient management of the thermal conditions of the various plates and parts of the mold, in which the moving system of the invention is implemented, during a molding cycle, made and carried out by the same mold, for molding a piece or a component of plastic material.

More precisely, as hereinafter illustrated in detail, these advantageous performances offered by the moving system of the invention consist of:
- a significant reduction in the molding cycle time realized by the mold for molding a piece or a component of plastic material;
- the elimination of the material which is usually formed and remains attached to the pieces produced by injection molding of plastic material and which, being a waste, must be removed from the molded piece, with a consequent increase in its production cost;
- an optimum and efficient management of the electric energy consumption to keep the mold at temperature during the injection molding of the plastic parts.

The present invention also relates to a corresponding hot runner mold having a high thermal efficiency and a corresponding method for increasing the thermal efficiency of a hot runner mold.

### State of the prior art

The state of the art currently known in the field of injection molding of plastic material offers numerous technical solutions and systems, widely applied and subject to numerous improvements, which have been developed to meet the requirements and requirements of this sector, which is actually in continuous development and expansion.

In particular, in the field of injection molding of plastic material of parts and components, the so-called "hot runner" plastic injection molding technology has been established for a long time and widely used, wherein the plastic material, in the fluid state, which is injected into the mold to mold the piece, is kept hot and in temperature, usually by means of suitable electrical heating resistors, in the channel or channels which feed the plastic material to the injection nozzle, through which the plastic material, in the fluid state, is injected into the mold to mold the piece.

In this way, it is avoided that the plastic material, in the fluid state, which remains in the channel or channels which feed it to the injection nozzle, solidifies between one molding cycle and the other, of the molding cycles of the pieces of plastic material which are made with the mold, and therefore creates problems and criticality during their molding.

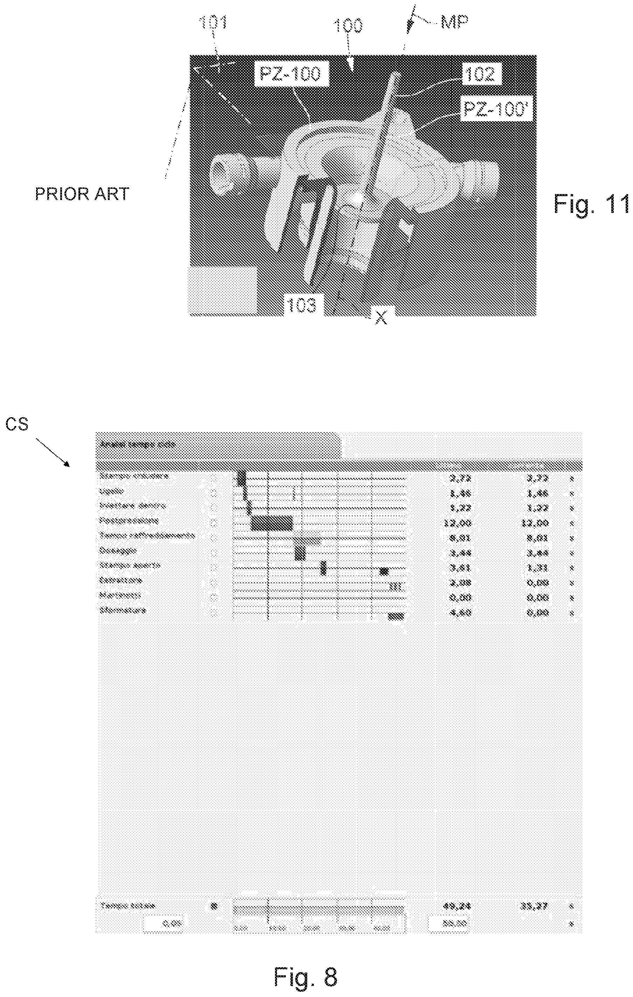

For the sake of clarity, Fig. 11 shows a generic piece PZ-100, made of plastic material, having for example a typical shape of a rotation solid with respect to a central axis X of symmetry, which is molded by means of a conventional hot runner injection molding system, generally indicated with 100.

As it can be seen from this Fig. 11, the piece PZ-100 is produced and molded by injecting the plastic material in the molten or fluid state, schematically represented by an arrow MP, into the cavities of a mold, indicated by 101 and schematically indicated by a dashed and dotted line, through a central duct or channel 102, kept hot and in temperature, which leads into a circular disk-shaped injection chamber 103, which in turn communicates along its circular periphery with the mold cavity 101 defining the shape of the piece PZ-100.

In this way, the plastic material MP is fed from a central region, corresponding to the channel 102, and is injected and distributed in a regular and uniform manner in the cavity of the mold 101 which define the cylindrical surfaces of the piece PZ-100 to be molded, that is along the internal circular development of such surfaces.

This well-known molding system 100, which applies a concept and has a configuration widely used in plastic injection molding technology, although it is capable of ensuring good surface quality and absence of defects of the produced piece, is not, however, free from problems, and in particular it has the considerable drawback that the plastic material MP which fills the channels for access to the cavity of the mold 101 and solidifies at the end of the injection phase in the same mold 101, with this plastic material constituting the so-called sprue, designated by PZ-100', remains attached to the body of the piece PZ-100, once it has been molded.

Therefore, this material PZ-100', in addition to involving a greater consumption of plastic material to mold the piece and therefore a corresponding higher production cost, being a waste material, must be suitably removed in a step subsequent to molding of the piece, with consequent lengthening of the production time of the finished part and therefore, also in this case, with a corresponding additional production cost.

Moreover, in the sector of hot-runner injection molding of plastic material and of the related technology, in addition to the need to always solve new technical problems posed by the rapid evolution and continuous expansion of this sector, there is a strong need to optimize, at least in general, the various steps and operations which characterize and in which this technology of hot-runner injection molding of plastic material is articulated.

More specifically, the need is felt to optimize and make more efficient the movement of the plates and of the various parts, which can be moved relative to each other, of which the mold, used to mold the plastic parts by injection, is made, since this movement in fact defines and determines the time of the molding cycle which is carried out by the same mold to mold each piece and therefore has a considerable weight in determining the industrial production cost of the piece.

In this context, as said, numerous solutions have been developed, which however, some more and some less, are not free from problems, limits and drawbacks, such as, for example, a still long and unsatisfactory timing of the molding cycle of parts, particularly critical and complex, of plastic material, a risk of solidification in the area of the injection nozzle of the plastic material with consequent blocking of the injection, and other drawbacks.

In any case, regardless of the solutions currently available, although valid and widely applied successfully, the aim and the interest to go beyond them are always alive, in order to further consolidate in industry and manufacture the technology of plastic hot runner injection molding and to extend this technology in new fields of application.

For the sake of completeness of information and in order to provide a picture as exhaustive and complete as possible of the technical context which forms the background to the present invention, the following documents are mentioned, found and selected by means of a preliminary search by the patent databases, which describe technical solutions and systems, concerning the field and technology of injection molding of plastic material, which appear to share some points and characteristics with the moving system, object of the present invention, of the plates of a hot runner mold for injection molding of plastic material, and with a corresponding hot runner mold having a high thermal efficiency:
- CN 215472821 U
- US 2021/0394415 A1
- CN 205291480 U
- EP 2 736 696 B1
- CN 102320114 A
- CN 102019396 A
- US 4,412,805 A

In particular, among those mentioned above, patent document CN 102320114 A describes a process, with a rapid heating cycle, for molding plastic material using a mold comprising heating plates, wherein the process requires that these heating plates are heated and cooled and their temperature controlled, and for this purpose that they are appropriately moved, with respect to the fixed plates of the mold, with the aid of a spring, during each molding cycle.

However, even the process known from this patent document does not appear to be free from limitations and drawbacks, so as to require further improvements aimed, for example, at reducing the times of the molding cycle which is carried out by this process.

There are also mentioned patent documents FR 2 937 578 A1 and US 4 867 668 A both disclosing a mold for molding of plastic material, exhibiting a plurality of plates provided for being moved reciprocally and cooperating each other during the molding process, wherein also these molds, disclosed by these two patent documents, appear to require further improvement in order to reduce the time of the molding cycle.

It is also emphasized that the present invention presents itself as an interesting evolution and improvement of a previous project, developed and carried forward in the past by the same Applicant, corresponding to the granted European patent EP 2 736 696 B1.

In particular, the aim of this previous project was essentially that of improving the quality of the injection molding of plastic material pieces having a solid or rotational symmetry shape, i.e. an external shape, cavities and axial holes, through or not, defined by generally cylindrical surfaces, conical or the like, which generally develop around and extend along a central axis of symmetry of the piece.

For this purpose, the project proposed a hot runner injection molding system comprising a ring-shaped injection port, or circular gate, adapted to receive the plastic material in the molten state, and to distribute it uniformly in the mold cavity to mold the workpiece, and a heating inductor, also ring-shaped, associated with the circular injection port so as to control its temperature in real time, in particular on the basis of the specific rheological characteristics of the plastic material used to mold the workpiece.

Now the present invention, among its objectives, also proposes to go further and improve the performances and results obtained with this previous project, so as to be applicable also to the molding of pieces having any shape, therefore not only a solid rotation one, as well as to hot runner injection molding systems comprising a point injection nozzle or gate or the like and necessarily a ring gate, due to a substantial increase in the thermal efficiency of the mold used to mold the workpiece, in turn, obtained by an optimum and improved movement of the plates and in general of the parts that form and constitute the same mold.

### Summary of the invention

Accordingly, in view of the context as illustrated above, a first object of the present invention is to develop a system for injection molding, of the hot-runner type, of components and parts, of plastic material, exhibiting a solid rotation shape but not only that, having the ability to effectively control the temperature and keep warm the injection gate area of the molten plastic material in the mold used to mold the components and parts, by means of a suitable and optimum movement of the plates and in general of the movable parts constituting the same mold, so as to significantly improve the thermal efficiency and therefore the performance of the hot runner injection molding system of the components and parts of plastic material.

A second object of the present invention, which can be linked to the first one, is also to develop and make available a mold for hot-runner injection molding of components and parts of plastic material, which, in view of an improved and high thermal efficiency, is such as to allow a significant increase and improvement in its performance, such as for example a significant reduction in the time of the molding cycle which is carried out by the mold for molding the piece of plastic material.

A further object of the present invention, which can be linked to the preceding ones, can also be seen in that of developing and providing a mold for hot-runner injection molding of components and parts of plastic material, which advantageously allows to avoid, during the molding step of the workpiece, the formation of the sprue, i.e. of a scrap or waste part which, in addition to implying a greater quantity of plastic material for molding the single workpiece so as to increase the production cost thereof, must be removed from it once it has been molded.

The above objects can be considered fully achieved by the press having the features defined by the independent claim 1, by the press defined by independent claim 7, and by the corresponding method for increasing the thermal efficiency of a hot runner mold having the features defined by independent claim 9.

Particular embodiments of the moving system of the invention of the plates of a mold, of the corresponding mold, and of the corresponding method are further defined by the dependent claims.

### Advantages of the invention

As it will be apparent from the following description, the system for moving the plates of a mold, of the hot runner type, for injection molding of plastic material, according to the present invention, the corresponding hot runner mold with high thermal efficiency, and the corresponding method for increasing the thermal efficiency of a hot runner mold, offer a series of relevant and unique advantages, some of which have already been previously outlined, among which the following are mentioned purely by way of example:
- a significant reduction in the molding cycle time of the part or piece of plastics, thanks to an improved thermal efficiency of the mold used to mold the part or piece;
- elimination of the sprue that, in conventional hot runner injection molding systems of components and plastic parts, is formed during molding of the workpiece and remains attached thereto, whereby, being a scrap, it must be removed from the workpiece once molded;
- a consequent saving and less waste of plastic material, since all the plastic material injected by the nozzle is used to mold the piece, and what remains, after injection, in the hot nozzle, is used to mold the next piece, so that there is not, as in the prior art, the formation of the sprue that remains attached to the workpiece and must be subsequently removed;
- a significant increase of the overall thermal efficiency of the mold, with the effect of achieving considerable advantages, such as, as already pointed out, a significant corresponding reduction in the time of the molding cycle realized by the same mold and the elimination of the sprue which, being a production waste, must be eliminated after the molding of the piece;
- the ability to keep the plastic material in the injection nozzle at temperature and in the molten state, so as to prevent the plastic material from solidifying in the nozzle idle times, between one molding cycle and the other to inject such plastic material into the mold, and thus create problems during the injection molding step of the workpiece.

### Brief description of the drawings

These and other objects, features and advantages of the present invention will become apparent from the following description of a preferred embodiment thereof, given purely by way of example with reference to the accompanying drawings, wherein:
Fig. 1 is a graphical view, in perspective form, showing in section a hot runner mold, according to the present invention, for injection molding of components and parts of plastic material, comprising a plurality of plates which can be moved and spaced from each other, in a respective first closed operating configuration, with the various plates of the mold in contact and closed against each other, wherein the mold implements an innovative system, for moving the plates and in general the parts of which it is constituted, suitable to increase the thermal efficiency of the same mold;
Fig. 1a is a graphic view, in perspective form, showing, in an enlarged scale, a region, with some parts removed, of the mold of the invention of Fig. 1, so as to highlight two heating elements, which can be moved, which characterize the mold itself and are supported by a respective intermediate supporting plate, which can also be moved;
Fig. 1 B is a further graphic view in perspective form, showing, on an enlarged scale and in section, a zone of the mold of the invention of Fig. 1, including an injection nozzle integrated in a fixed bottom plate;
Fig. 2 is a graphical view, in perspective form, showing in section the hot runner mold of the invention of Fig. 1, for the injection molding of components and parts of plastic material, in a respective second operating configuration, partially open, in which the remaining part of the mold, or core of the mold, including also the respective intermediate supporting plate, bearing the two heating elements, has been moved and spaced from the fixed bottom plate, integrating the injection nozzle, of the mold;
Fig. 2A is a graphical view, integrating Fig. 2, showing in plan view the hot runner mold of the invention of Fig. 1, for injection molding, in the respective second operating configuration, partially open, with the core of the mold moved and displaced with respect to the fixed bottom plate;
Fig. 3 is a graphical view showing the mold of the invention of Fig. 1 in a respective third operating configuration, fully open, suitable to allow the removal of the molded part, in which a core of the mold containing the molded part has been moved and spaced from the intermediate supporting plate of the mold;
Fig. 4 is a graphical view showing in plan the mold of the invention of Fig. 1 in a respective fourth operating configuration, in which the piece, after being molded, is extracted and removed from the mold;
Fig. 4A is a graphical view, integrating Fig. 3, showing the completely open configuration assumed by the mold to allow the removal from it of the piece of plastic material, once molded;
Fig. 4B is a further graphical view, integrating the previous figures, showing in section the fixed bottom plate and the intermediate supporting plate, movable and suitable to be spaced from the fixed bottom plate, in the first closed operating configuration of the mold of the invention with these two plates closed against each other;
Fig. 5 shows in enlarged form one of the heating elements supported by the movable intermediate supporting plate of the mold of the invention;
Fig. 6, divided into sections (a)-(d), is a series of graphic images showing in detail, externally and in section, the hot runner injection nozzle integrated in the fixed bottom plate of the mold of the invention;
Fig. 7 is a flow chart, with operating blocks, which, in addition to the previous figures, illustrates the operation and use of the mold of the invention, which implements the system for moving the plates and parts of which the same mold is constituted, so as to increase its thermal efficiency;
Fig. 8 is a diagram illustrating the time sequence and the times of the various phases of an example and typical molding cycle realized with a mold, according to the invention, which implements a moving system, also according to the invention, adapted to move the plates and the parts of which the mold is constituted, so as to increase its thermal efficiency;
Figure 9, divided into the sections (a)-(j), shows some diagrams, simulations and diagrams developed during the design concerning the mold of the invention, for injection molding of plastic material, and the moving system, implemented in such mold, for moving the respective plates and parts, in order to verify the advantageous and innovative characteristics and performances of this mold and of this moving system;
Fig. 10 is a series of photographic images of a mold, with high thermal efficiency, actually constructed in the context of the project underlying the invention, which implements the respective moving system for moving the plates and the other parts of the mold; and
Fig. 11 is a perspective graphical view of a piece, exhibiting a shape of a rotation solid, molded by a conventional plastic hot runner injection molding system.

### Detailed description of a preferred embodiment of the moving system of the invention for moving the plates of a hot runner mold for plastic injection molding, and of a corresponding high thermal efficiency mold

With reference to the drawings, a moving or movement system, according to the present invention, designed and suitable for moving the plates of a mold, of the hot runner type, for the injection molding of plastic material, in order to increase the thermal efficiency of the mold, is indicated as a whole by 10.

This moving system 10 is implemented in a mold, indicated as a whole by 20, for the injection molding of a plastic material, generally indicated by MP, wherein the mold 20 can be installed or is installed in a press PR in such a way as to be integrated in the structure of the press PR, and is of the type comprising a plurality of movable and fixed plates and parts, such as in particular:
- a first bottom plate, indicated with 21, fixed, integral with a fixed structure or part PR' of the press PR;
- a second intermediate support or supporting plate, indicated by 22, which can be moved with respect to the other parts and plates of the mold 20, arranged adjacent to the first fixed bottom plate 21 of the mold 20;
- a third intermediate molding plate, indicated by 23, adjacent to the second intermediate supporting plate 22, movable, wherein also this third intermediate molding plate 23 is movable with respect to the other parts and plates of the mold 20, and in turn has a cavity adapted to receive the plastic material MP in the molten state for molding a component or piece or part, designated by PZ, of plastic material MP during a corresponding molding cycle made by the mold 20; and
- a support block, indicated by 24, movable, able to support the third intermediate molding plate 23,
wherein the third intermediate molding plate 23 and the support block 24 constitute a core, designated by 25, which can be moved, of the mold 20.

Moreover, the mold comprises an injection device or nozzle, indicated as a whole by 30, of the hot-runner type, which is integrally integrated in the first fixed bottom plate 21, and is adapted to inject, during the molding cycle made and carried out by the mold 20, the plastic material MP, in the molten state, in the cavity formed in the third intermediate molding plate 23, so as to mold the part or piece PZ of plastic material MP.

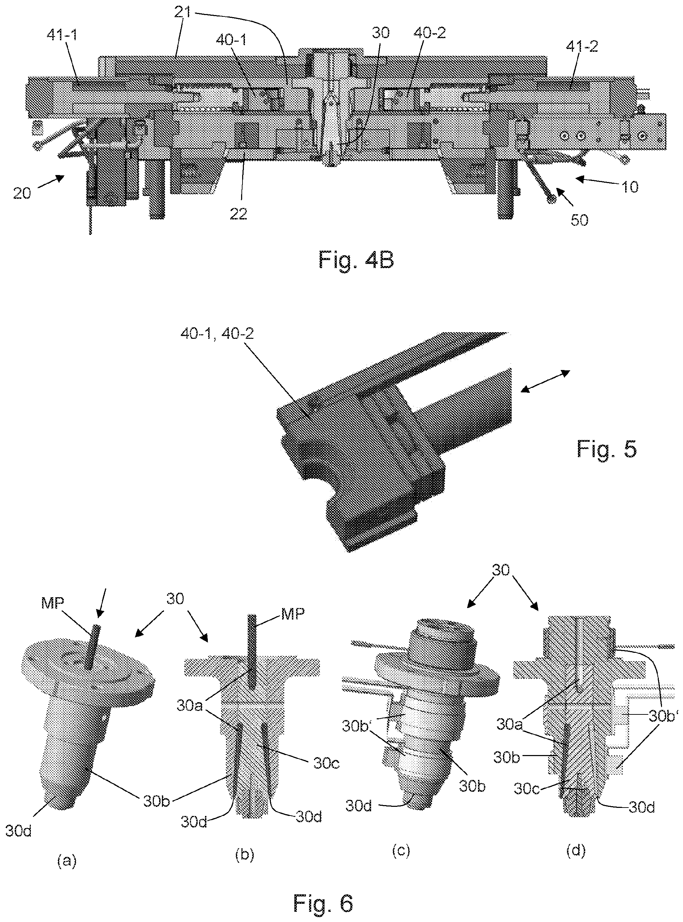

As shown in detail in Fig. 6, divided into sections (a)-(d), this injection nozzle 30, integrated and integral with the first bottom plate 21, in turn comprises:
- a hot runner, indicated by 30a, adapted to receive and feed the plastic material MP, in the molten state, through the injection nozzle 30;
- an outer or external body 30b associated with one or more electrical resistors 30b' having the function of keeping the hot runner 30a of the injection nozzle 30 warm and at temperature; and
- a circular diaphragm 30c, adapted to receive the plastic material MP, in the molten state, from the hot runner 30a of the injection nozzle 30 and to distribute it circularly and uniformly in the cavity, of the mold 20, included in the third intermediate molding plate 23, through a circular injection port 30d of the same injection nozzle 30.

According to a salient feature of the mold 20 of the invention, there are also provided one or more heating elements, for example two, designated by 40-1, 40-2, as shown in the drawings, wherein these two heating elements 40-1, 40-2 are supported by the second, movable, intermediate supporting plate 22 of the mold 20, and are distinct and additional with respect to the heating means which are associated with the hot runner injection nozzle 30, which is integrated in the fixed bottom plate 21 of the mold 20.

In particular, these two heating elements 40-1, 40-2 have the function of keeping the injection nozzle 30 warm and at temperature, by means of the heat generated by them, so as to prevent it from cooling during the molding cycle, carried out by the mold 20, of the piece PZ of plastic material, as described in detail below, while illustrating the operation of the mold 20.

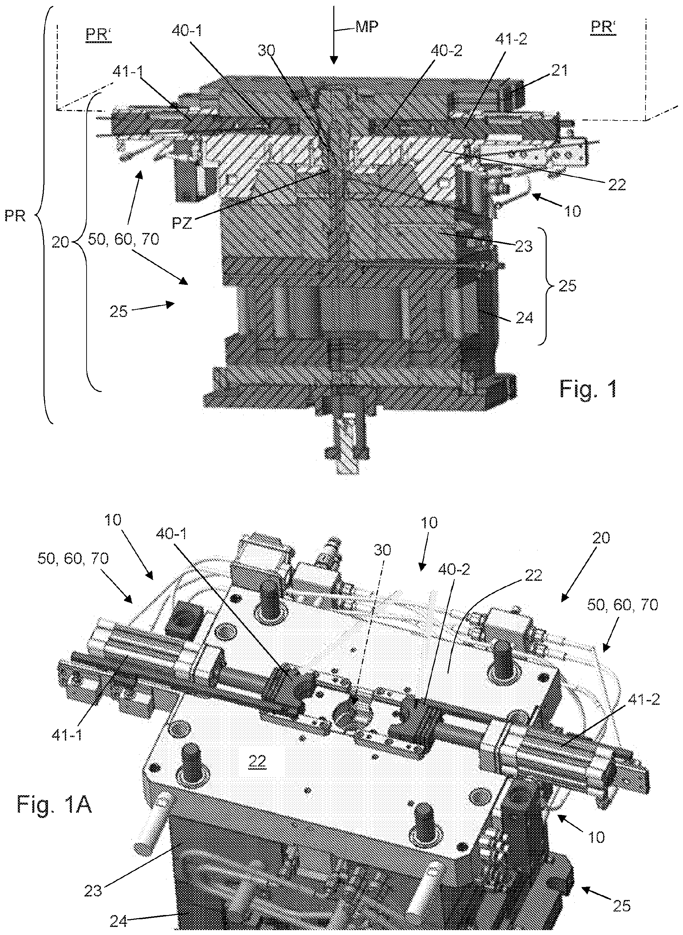

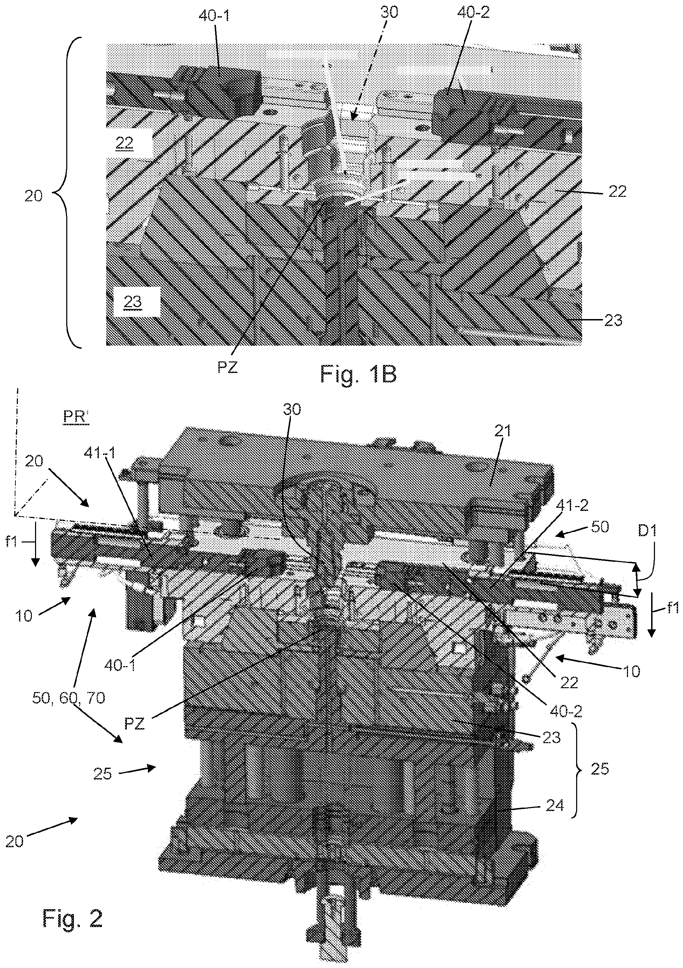

For this purpose, these two heating elements 40-11 and 40-2 each integrate an electrical resistance suitable for generating heat and may have a half-sleeve shape, as clearly shown in Figs. 1 and 5, so as to be able to couple, on diametrically opposite sides, with the injection nozzle 30, integrated in the first bottom plate 21, to keep it stably at temperature and therefore prevent its cooling during each molding cycle realized by the mold 20.

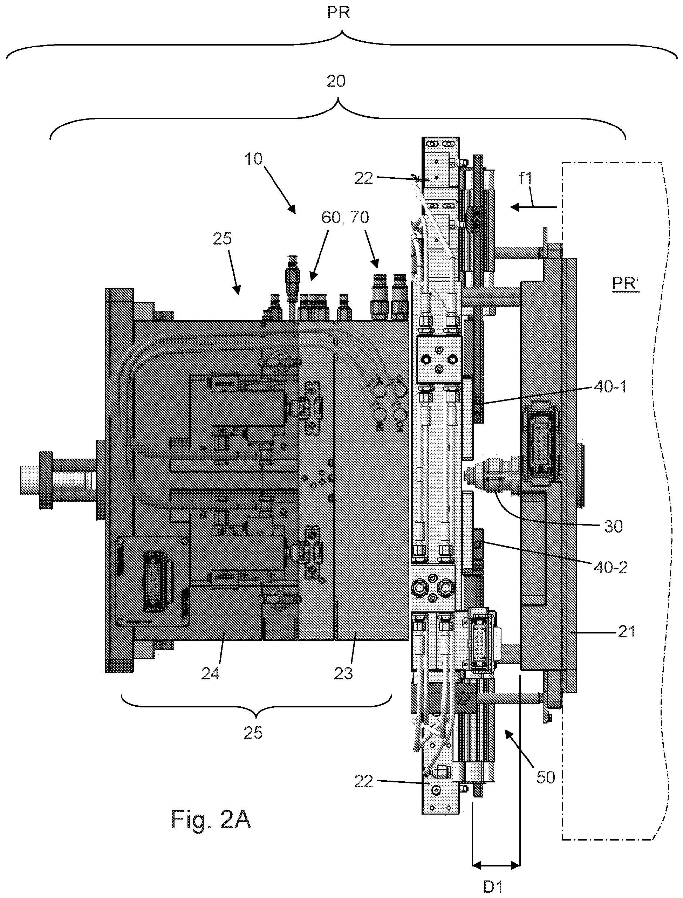

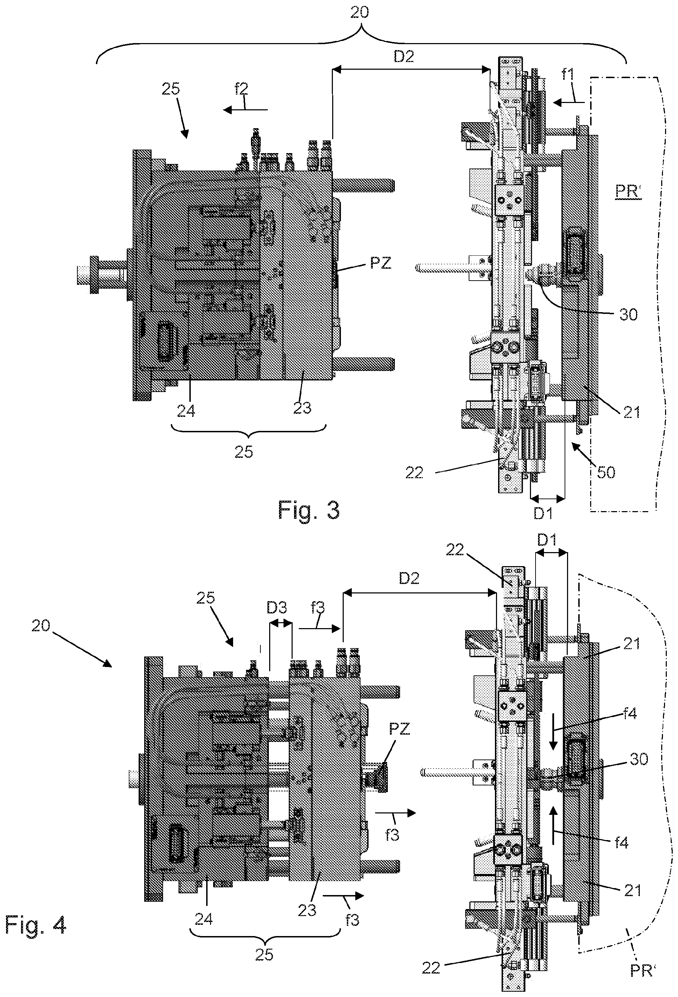

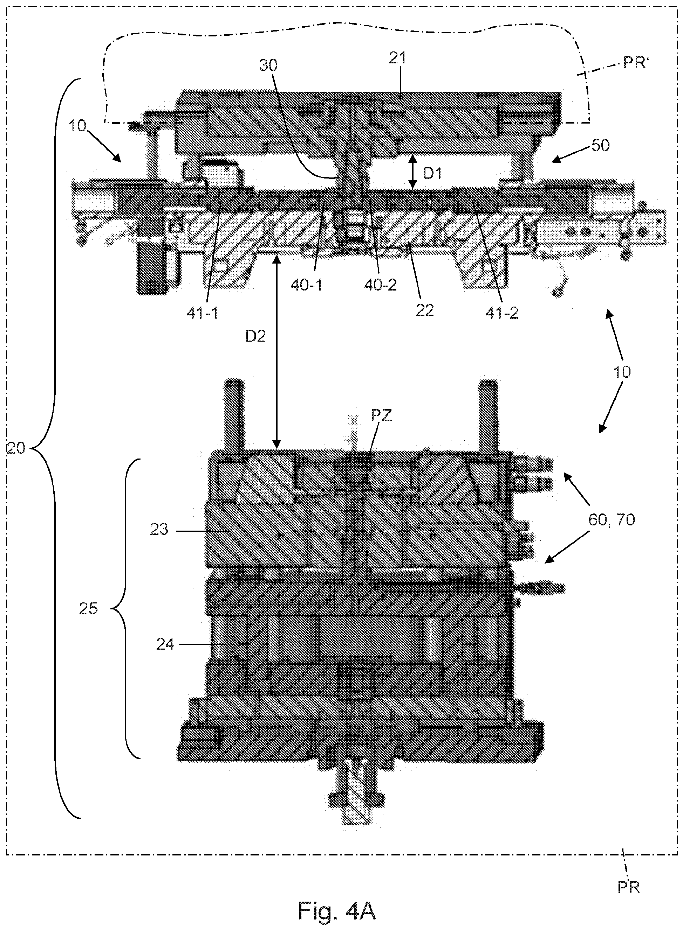

According to a further salient feature of the present invention, the moving system 10, implemented in the mold 20, for injection molding of plastic material, to move the respective plates and parts, in turn comprises :
- first movement or moving means, generally designated by the reference numeral 50, adapted to move and space, at the opening of the mold 20, according to a given distance D1 and as indicated by an arrow F1 in Figs. 2 and 3, the second intermediate support plate 22, supporting the heating element or elements 40-1, 40-2, integrally and jointly with the core 25 in a closed configuration, that is with the respective third intermediate molding plate 23 and the respective support block 24 enclosed in a packet against each other, from the first fixed bottom plate 21, integrating the injection nozzle 30, in order to separate these two plates 21 and 22 before the complete opening of the mold 20 and the extraction from the same mold 20 of the piece PZ, produced and molded with the plastic material MP;
- second movement or moving means, generally designated by the reference numeral 60, able to move and space, according to a given distance D2 and as indicated by an arrow F2 in Fig. 3, once the molded piece PZ, made of plastic material MP, has cooled, the core 25 of the mold 20, consisting of the third intermediate molding plate 23 and the support block 24, from the intermediate support plate 22, in turn spaced apart by the distance D1 from the fixed bottom plate 21, so as to allow to extract the molded piece PZ of plastic material MP from the mold 20, after the first bottom plate 21 and the second intermediate support plate 22 have been separated and spaced from each other by means of the first moving means 50; and
- third movement or moving means, generally designated by the reference numeral 70, adapted to move and space, according to a given distance D3 and as indicated by an arrow F3 in Fig. 4, the third intermediate molding plate 23, with the molded piece PZ of plastic material MP, from the support block 24, so as to extract the molded piece PZ of plastic material from the mold 20.

Thanks to these various movement or moving means, and in particular to the first and second moving means 50 and 60, in the operation of the mold 20, both the intermediate support plate 22 and the core 25, of the mold 20, which contains the piece PZ, molded with the plastic material MP, and is usually at a temperature of about 100 °C, are suitably separated and spaced from the injection nozzle 30, integrated in the fixed bottom plate 21, which is instead usually at a temperature of about 300 °C.

In this way, the air can circulate freely and more easily in the space separating the injection nozzle 30, at a higher temperature, and the core 25 of the mold 20, at a lower temperature, which has received the plastic material MP to mold the piece PZ.

Therefore, thanks to this air circulation, the core 25 of the mold 20 and the molded piece PZ cool more quickly, so as to allow an earlier removal of the molded piece PZ from the mold 20.

It is therefore possible, by exploiting this quicker and faster cooling of the core 25 of the mold and of the piece PZ, once molded, to reduce correspondingly the time or duration of the molding cycle which is realized by the mold 20 for molding the piece or part PZ.

For reasons of synthesis, these moving means 50, 60, 70 which characterize the moving system 10 of the invention, able to move the plates and in general the parts of the mold 20, in order to increase its thermal efficiency, will not be described in detail, as regards their actual and constructive embodiments, being widely known and part of the knowledge and information available to those skilled in the art in the field of the present invention.

For example, these known actuating means can be made of conventional and conventional hydraulic circuits and actuators, in particular hydraulic jacks, or electric actuators, associated with the plates to be moved, wherein these hydraulic or electric actuators are controlled by suitable control units and control means on the basis of a given program, which establishes the times and ways of intervention of these hydraulic or electrical actuators to move the various plates and parts 21, 23, 24 of the mold 20 relative to each other, during each molding cycle of the piece PZ molded with the plastic material MP.

Furthermore, still according to a further salient feature of the present invention, in the operation of the mold 20, after that, during each molding cycle carried out by the mold 20, the second intermediate support plate 22 has been moved and spaced, according to the determined distance D1, by means of the first moving means 50, from the first fixed bottom plate 21, the heating element or elements 40-1, 40-2, supported by this second intermediate support plate 22, are each moved, as indicated by arrows f4 in Fig. 4, from a respective retracted position, at a given distance from the injection nozzle 30, to a respective forward position, so as to couple in contact with the injection nozzle 30, integrated and integral with the first fixed bottom plate 21, so as to keep the injection nozzle 30 warm and at temperature during the molding cycle carried out by the mold 20.

Then these two heating elements 40-1 and 40-2 are both moved, in the following of the molding cycle carried out by the mold 20, so as to return from the respective advanced positions, in contact with the injection nozzle 30, to the respective retracted positions, spaced apart from the same injection nozzle 30, after the piece PZ of plastic material has been removed and ejected from the mold 20.

In this way, the two heating elements 40-1 and 40-2 free the separation space, corresponding to the distance D1, between the first fixed bottom plate 21 and the second movable intermediate support plate 22.

Immediately afterwards, the second intermediate supporting plate 22 is moved by the first moving means 50 so as to close again against the first fixed bottom plate 21, while at the same time also the core 25 of the mold 20, consisting of the third intermediate molding plate 23 and the support block 24, is moved so as to close again against the second intermediate support plate 22, so as to recover the distance D2, whereby in this way the mold again assumes the respective closed configuration, as shown in Fig. 1, so as to be ready to carry out a new molding cycle to produce a new piece PZ molded with the plastic material MP.

The two heating elements 40-1, 40-1, supported by the second movable intermediate support plate 22, can be controlled in various ways to be moved between the retracted position, in which they are spaced from the injection nozzle 30, integrated in the first bottom plate 21, and the close position, in which they cooperate in contact with the injection nozzle 30 to keep it warm and at temperature, so as to prevent it from cooling during the molding cycle of the part PZ.

For example, as shown in the drawings, these two heating elements 40-1, 40-2 can be moved by two respective pneumatic cylinders, indicated 41-1, 41-2 or two similar actuators, in order to couple, during each molding cycle of the mold 20, with the injection nozzle 30.

Air cooling means are also provided, of known characteristics and therefore not shown in the drawings, having the function of cooling with a flow of air the two pneumatic cylinders 41-1 41-2 suitable for moving the two heating elements 40-1 and 40-2, in order to prevent them from failing, since these two pneumatic cylinders 41-1, 41-2 cannot withstand too high temperatures.

Similarly, air cooling means, also known and therefore not shown in the drawings, can be provided in the mold 20, having the function of cooling with an air flow the area of the injection nozzle 30 and the molded part PZ of plastic material MP, after the molding step of the latter, in order to favour the separation and detachment between these two parts.

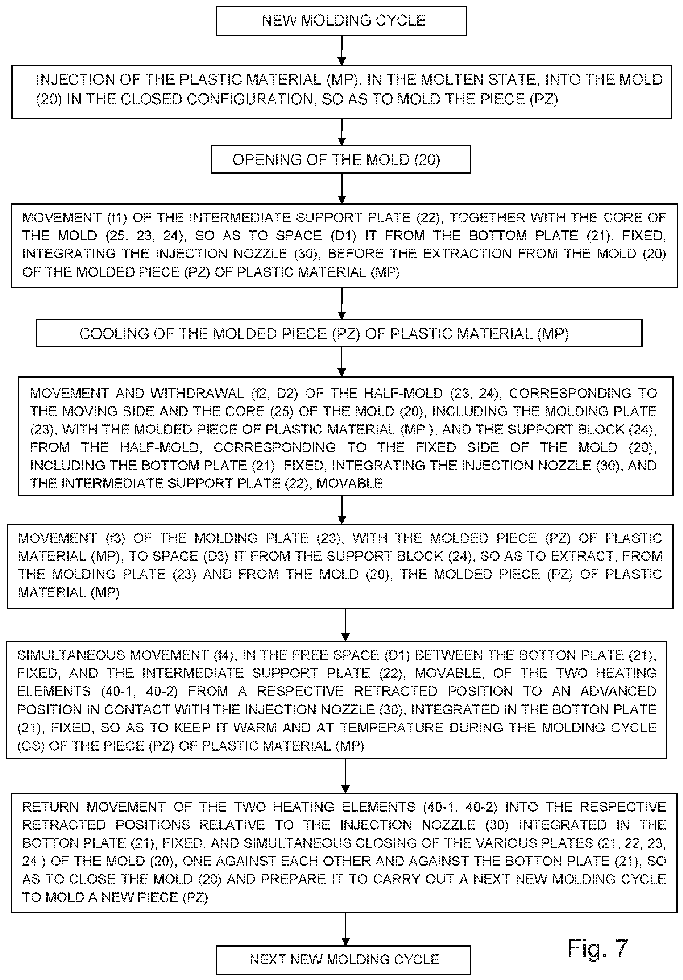

For the sake of clarity and integration of the foregoing description, the flow diagram, with operating blocks, of Fig. 7, illustrates the operation and use of the mold 20 of the invention, which implements the moving system 10 for moving the plates and parts of which the mold 20 itself is constituted, so as to increase its thermal efficiency.

Furthermore, in order to give a concrete and real idea of the advantages of the invention, the diagram of Figure 8 illustrates, by way of example, the various phases and the respective times of a molding cycle CS for injection molding a generic piece of plastic material, wherein this molding cycle CS has been performed and actually tested by means of a test mold, actually constructed, which implements the moving system 10 of the invention of the plates and parts of the same test mold.

As it can be observed and verified from this diagram and as it can also be confirmed by those skilled in the art, the execution times of the various phases of this molding cycle CS are considerably improved and reduced with respect to those of a molding cycle, for the same piece, performed and carried out by a conventional mold.

In particular, the various phases of this molding cycle CS, shown in Fig. 8 and actually carried out with a test mold, as specified above, have and exhibit, thanks to the moving system 10 of the invention implemented in this test mold so as to increase its thermal efficiency, a better integration between these various phases, with reduced dead times between them, compared with the molding cycle performed with a conventional mold.

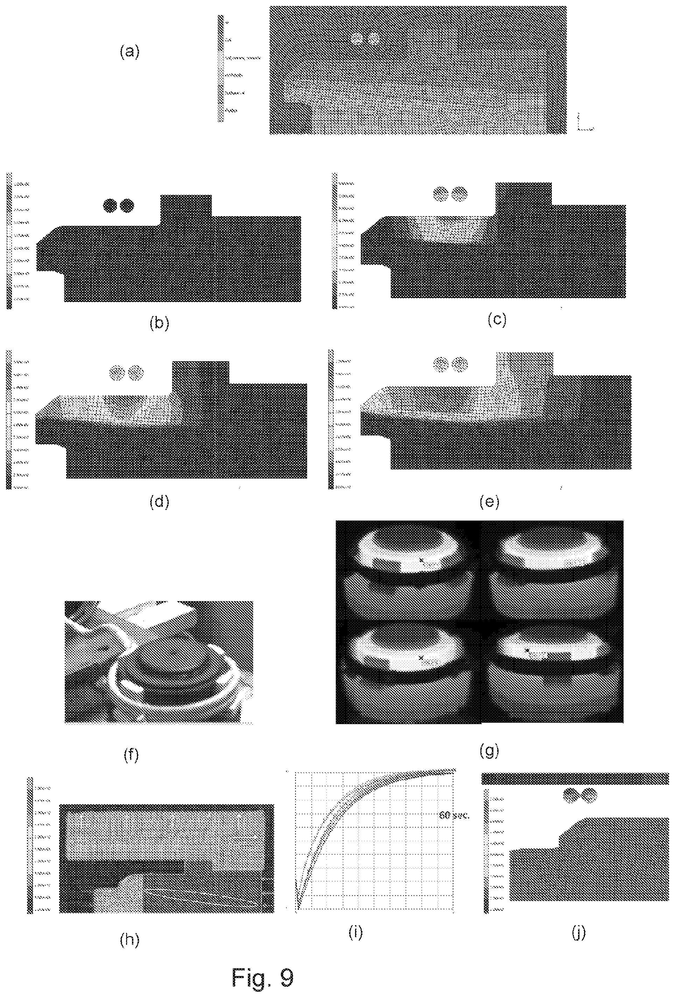

Furthermore, as confirmation and in order to prove the thorough research and development and experimentation work, at the basis of the present invention, the images of Fig. 9, divided into sections (a)-(f), show some diagrams, simulations and diagrams, which have been developed during the design and development of the mold, object of the invention, having a high thermal efficiency for injection molding of plastic material, and of the respective moving system, implemented in such mold, for moving the plates and parts thereof.

These images shown in Fig. 9 reflect the studies and experimentation carried out on various prototypes and configurations of the mold, object of the invention, during its development, including those carried out during the previous Applicant's project which provided for the use of an inductor to heat the area of the injection gate, and in particular they refer to the in-depth analysis with the Finite element method (FEM) which has been carried out to simulate and optimize the temperature distribution in the various areas of the mold in various configurations and operating situations concerning the movement of its plates and parts.

Both the FEM simulations and the numerous experimental tests carried out have shown how the moving system, object of the invention, of the plates and of the other parts of a hot runner mold, for injection molding of plastic material, allows to improve the thermal efficiency and consequently to obtain performances higher than those of a conventional mold.

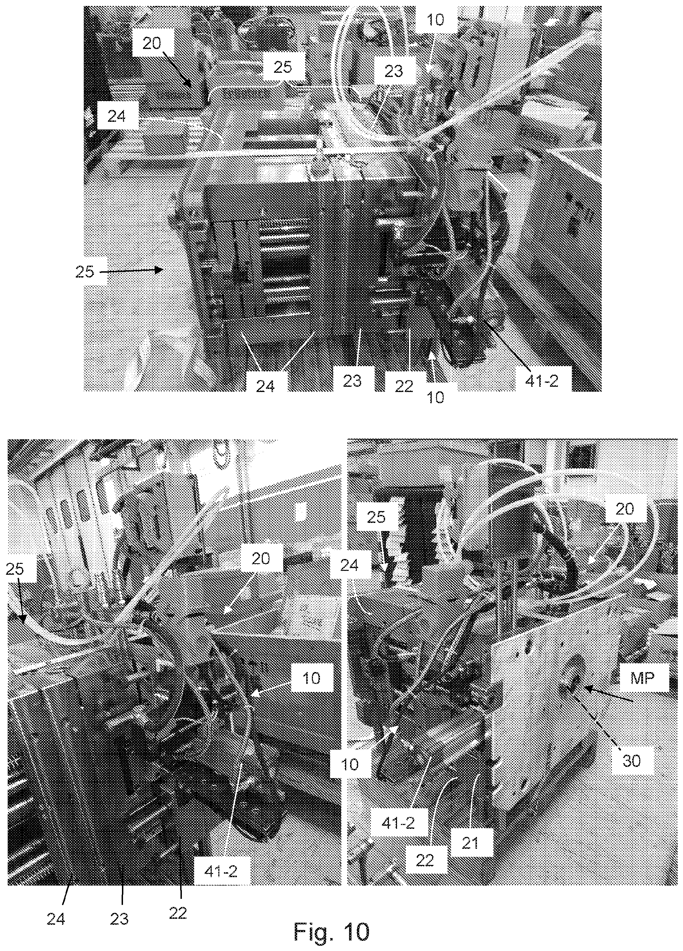

Finally, again in order to provide a complete overview of the project, at the basis of the present invention, and of the considerable work of experimentation to develop and refine it up to a final stage, the photographic images of Fig. 10 show a mold, with high thermal efficiency, actually constructed and tested within the context of this project, which implements the moving system 10 of the invention to move the plates and other parts of the mold.

It is therefore clear that the moving or movement system 10 of the invention, as described above, able to move the plates and in general the parts of a mold, fully achieves the intended objects, and in particular allows to significantly increase the thermal efficiency of the mold 20, in which this moving system 10 is implemented, so as to obtain a faster cooling of the piece PZ, once molded with the plastic material MP, thanks to the separation and spacing between the first fixed bottom plate 21 and the second movable intermediate support plate 22, and between the latter and the core 25, of the mold 20, receiving the plastic material MP, in the fluid state, for molding the part PZ, which occur during each molding cycle CS carried out by the mold 20, and a corresponding reduction in the time of this molding cycle CS for injection molding the piece PZ of plastic material.

Moreover, advantageously, the same moving system 10 of the invention allows to keep warm and at temperature, thanks to the improved thermal efficiency of the mold 20 following and as effect of the intervention of the two heating elements 40-1, 40-2, the area of the injection nozzle 30, in order to keep it hot and prevent it from cooling during the molding cycle CS carried out by the same mold 20.

The invention is set out in the appended set of claims.

## Claims

1. Press (PR) for injection molding of plastic material (MP), comprising a hot runner mold (20), integrated in the press (PR) and in turn comprising a moving system (10) of the plates and parts of the hot runner mold (20), designed to improve and increase the overall thermal efficiency of the mold (20), wherein said mold (20) comprises:
- a first bottom plate (21), fixed, integral with a structure or fixed part (PR') of the press (PR);
- a second intermediate support plate (22), movable with respect to the other parts and plates (21, 25) of the mold (20);
- a movable core (25) consisting of:
- a third intermediate molding plate (23), adjacent to said second intermediate support plate (22) and also movable, like the latter, with respect to the other parts and plates of the mold (20), said third intermediate molding plate (23) being suitable for receiving the plastic material (MP), in the molten state, to mold a component or piece (PZ) of plastic material (MP) during a corresponding molding cycle (CS) carried out by the mold (20); and
- a movable support block (24) to support said third intermediate molding plate (23);
- a injection device or nozzle (30), of the hot runner type, integrated in said first bottom plate (21), fixed, said injection nozzle (30) being able to inject, during the molding cycle (CS ) carried out by the mold (20), the plastic material (MP), in the molten state, into a cavity, formed in said third intermediate molding plate (23) of the core (25) of the mold, so as to mold the component or piece ( PZ) of plastic material (MP); and
- one or more heating elements (40-1, 40-2), supported by said second intermediate support plate (22), movable, said one or more heating elements (40-1, 40-2) being additional with respect to the heating means having the function of keeping hot and in temperature the injection nozzle (30) integrated in said bottom plate (21), fixed, of the mold (20);
wherein said moving system (10), implemented in the mold (20), in turn comprises:
- first moving means (50) for moving and spacing (f1, D1), upon opening the mold (20), said second intermediate support plate (22), supporting said one or more heating elements (40-1, 40-2), jointly with said core (25, 23, 24) in a closed configuration with said third intermediate molding plate (23) and said support block (24) closed in packet against each other, from said first bottom plate (21), fixed, integrating the injection nozzle (30), so as to separate the two plates (21, 22) before extracting the molded piece (PZ) of plastic material (MP) from the same mold (20);
- second moving means (60) for moving and spacing (f2) the core (25) of the mold (20), consisting of said third intermediate molding plate (23) and said support block (24), from said intermediate plate support (22), so as to allow the molded piece (PZ) of plastic material (MP) to be extracted from the mold (20), after the first bottom plate (21) and the second intermediate support plate (22) have been separated and spaced (f1) from each other by means of said first moving means (50); and
- third moving means (70) for moving and spacing (f3) said third intermediate molding plate (23), with the molded piece (PZ) of plastic material (MP), from said support block (24), so as to extract the molded piece (PZ) of plastic material (MP) from the mold (20); and
**characterised in that** the press (PR) further comprises control means for controlling said moving system (10) in such a way that after the second intermediate support plate (22) has been moved and spaced (f1), by means of said first moving means (50), from the first fixed bottom plate (21), during each molding cycle of the mold (20), said one or more heating elements (40-1, 40-2) are suitable for being moved (f4) so as to couple with the injection nozzle (30), integral with the first bottom (21), fixed;
whereby the moving system (10) is designed to increase the thermal efficiency of the mold (20), in order to obtain a more rapid cooling of the piece (PZ), once molded with the plastic material (MP), thanks to the separation and spacing which occur, during the molding cycle of the piece (PZ), between the first fixed bottom plate (21) and the second intermediate support plate (22), movable, thereby allowing a corresponding reduction of the time of the molding cycle carried out by the mold (20) to mold by injection the piece (PZ) of plastic material (MP), and also, thanks to the intervention of the two heating elements (40-1, 40-2), to keep warm and in temperature the area of the injection nozzle (30), so as to prevent it from cooling down during the molding cycle of the piece (PZ).

2. Press (PR) for injection molding of plastic material (MP) according to claim 1, wherein said injection nozzle (30), integrated in said first bottom plate (21), fixed, of the mold (20), in turn comprises:
- a hot runner (30a) adapted to receive and feed the plastic material (MP), in the molten state, to be injected into the mold (20), so as to mold the piece (PZ) of plastic material (MP);
- an external body (30b) associated with one or more electrical resistances having the function of keeping the hot runner (30a) of the injection nozzle (30) hot and in temperature; and
- a circular diaphragm (30c), adapted to receive the plastic material MP, in the molten state, from the hot runner (30a) of the injection nozzle (30) and to distribute it circularly and uniformly in the cavity, formed in the third intermediate molding plate (23) of the core (25) of the mold (20), through a circular injection opening or port (30d) of the same injection nozzle (30).

3. Press (PR) for injection molding of plastic material (MP) according to claim 1 or 2, wherein said mold includes only two heating elements (40-1, 40-2), supported by said second intermediate support plate (22), movable, said two heating elements (40-1, 40-2) being suitable for coupling, from diametrically opposite sides, with said injection nozzle (30), integrated in said first bottom plate (21), fixed, to keep it stably in temperature and therefore prevent its cooling during each molding cycle of the mold (20);
wherein said two heating elements (40-1, 40-2) are adapted to be moved by two respective pneumatic cylinders (41-1, 41-2) or two similar actuators, in order to couple, during each molding cycle of the mold (20), with said injection nozzle (30).

4. Press (PR) for injection molding of plastic material (MP) according to claim 1 or 2 or 3, wherein said one or more heating elements (40-1, 40-2), included in said mold (20), have a semi-sleeve shape suitable for coupling with the external surface of the injection nozzle (30) and each incorporate an electrical resistance adapted to generate heat.

5. Press (PR) for injection molding of plastic material (MP) according to any one of the preceding claims, insofar as it depends on claim 3, wherein air cooling means are further provided for cooling with a flow of air the pneumatic cylinders adapted to move the two heating elements (40.1, 40-2) included in said mold (20).

6. Press (PR) for injection molding of plastic material (MP) according to any one of the preceding claims, wherein air cooling means are further provided for cooling, with a flow of air, the area of the injection nozzle (30) and of the molded piece (PZ) of plastic material (MP), after the molding phase of the latter, in order to facilitate the separation and detachment between these two parts.

7. Press (PR) for injection molding of plastic material (MP) comprising a high thermal efficiency hot runner mold (20) for injection molding of plastic material (MP), comprising:
- a first bottom plate (21), fixed, integral with a structure or fixed part (PR') of a press (PR) in which the mold (20) is installable or is installed;
- a second intermediate support plate (22), adjacent to said first bottom plate (21) and movable with respect to the other parts and plates (22, 25) of the mold (20);
- a movable core (25) consisting of:
- a third intermediate molding plate (23), adjacent to said second intermediate support plate (22) and also movable with respect to the other parts and plates of the mold (20), said third intermediate molding plate (23) comprising a cavity adapted to receive the plastic material (MP), in the molten state, to mold a component or piece (PZ) of plastic material (MP) during a corresponding molding cycle (CS) carried out by the mold (20); and
- a movable support block (24) to support said third intermediate molding plate (23);
- a injection device or nozzle (30), of the hot runner type, integrated in said first bottom plate (21), fixed, said injection nozzle (30) being able to inject, during the molding cycle (CS ) carried out by the mold (20), the plastic material (MP), in the molten state, in the cavity of the mold (20) included in said third intermediate molding plate (23), so as to mold the component or piece (PZ) of plastic material (MP);
- one or more heating elements (40-1, 40-2), supported by said second intermediate support plate (22), movable, said one or more heating elements (40-1, 40-2) being additional with respect to the heating means having the function of keeping hot and in temperature the injection nozzle (30) integrated in said bottom plate (21), fixed, of the mold (20);
- first moving means (50) adapted for moving and spacing (f1, D1), upon opening the mold (20), said second intermediate support plate (22), supporting said one or more heating elements (40-1, 40-2), jointly with said core (25, 23, 24) in a closed configuration with said third intermediate molding plate (23) and said support block (24) closed in packet against each other, from said first bottom plate (21), fixed, integrating the injection nozzle (30), so as to separate the two plates (21, 22) before extracting the molded piece (PZ) of plastic material (MP) from the same mold (20);
- second moving means (60) for moving and spacing (f2) said core (25) of the mold (20), consisting of said third intermediate molding plate (23) and said support block (24), from said intermediate plate support (22), movable, so as to allow the molded piece (PZ) of plastic material (MP) to be extracted from the mold (20), after the first bottom plate (21) and the second intermediate support plate (22) have been separated and spaced (f1) from each other by means of said first moving means (50); and
- third moving means (70) for moving and spacing (f3) said third intermediate molding plate (23), with the molded piece (PZ) of plastic material (MP), from said support block (24), so as to extract the molded piece (PZ) of plastic material (MP) from the mold (20);
wherein said injection nozzle (30), integrated in said first bottom plate (21), fixed, included in the mold (20), in turn comprises:
- a hot runner (30a) designed to receive and feed the plastic material (MP), in the molten state, through the injection nozzle (30);
- an external body (30b) associated with one or more electrical resistances having the function of keeping hot and in temperature the hot runner (30a) of the injection nozzle (30); and
- a circular diaphragm (30c), adapted to receive the plastic material (MP), in the molten state, from the hot runner (30a) of the injection nozzle (30), and to distribute it circularly and uniformly in the cavity of the mold (20), included in the third intermediate molding plate (23), through a circular injection opening or port (30d) of the same injection nozzle (30); and
**characterised in that** the press (PR) further comprises control means for controlling said mold (20) in such a way that, after the second intermediate support plate (22) has been moved and spaced (f1), by means of said first moving means (50), from the first fixed bottom plate (21), during each molding cycle of the mold (20), said one or more heating elements (40-1, 40-2) are able to be moved (f4) so as to couple with the injection nozzle (30) integrated in the first bottom (21), fixed;
whereby said first, second and third moving means (50, 60, 70) are adapted to increase the thermal efficiency of the mold (20), so as to obtain a more rapid cooling of the piece (PZ), once molded with the plastic material (MP), thanks to the separation and spacing that occur, during the molding cycle of the piece (PZ), between the first fixed bottom plate (21) and the second intermediate support plate (22), movable, thereby allowing a corresponding reduction in the time of the molding cycle carried out by the mold (20) for molding by injection the piece (PZ) of plastic material (MP), as well as said two heating elements (40-1, 40-2) allow to keep the area of the injection nozzle (30) warm and in temperature, in order to prevent it from cooling down during the molding cycle of the piece (PZ).

8. Press (PR) for injection molding of plastic material (MP) according to claim 7, wherein said mold (20) includes only two heating elements (40-1, 40-2), supported by said second intermediate support plate (22), movable, said two heating elements (40-1, 40-2) being suitable for coupling, from diametrically opposite sides, with said injection nozzle (30), to keep it stably in temperature and therefore prevent its cooling during each molding cycle of the mold (20);
wherein said two heating elements (40-1, 40-2) are adapted to be moved by two respective pneumatic cylinders (41-1, 41-2) or two similar actuators, in order to couple, during each molding cycle of the mold (20), with said injection nozzle (30).

9. Method for increasing the thermal efficiency of a hot runner mold (20) for injection molding of plastic material (MP), comprising:
- a first bottom plate (21), fixed, integral with a structure or fixed part (PR') of a press (PR) in which the mold (20) is installable or is installed;
- a second intermediate support plate (22), adjacent to said first bottom plate (21) and movable with respect to the other parts and plates (22, 25) of the mold (20);
- a movable core (25) consisting of:
- a third intermediate molding plate (23), adjacent to said second intermediate support plate (22) and also movable with respect to the other parts and plates of the mold (20), said third intermediate molding plate (23) being adapted for receiving in a respective cavity the plastic material (MP), in the molten state, to mold a component or piece (PZ) of plastic material (MP) during a corresponding molding cycle (CS) carried out by the mold (20); and
- a movable support block (24) to support said third intermediate molding plate (23);
- an injection device or nozzle (30), of the hot runner type, integrated in said first bottom plate (21), fixed, said injection nozzle (30) being able to inject, during the molding cycle (CS ) carried out the mold (20), the plastic material (MP), in the molten state, in the cavity of the mold (20) included in said third intermediate molding plate (23), so as to mold the component or piece (PZ) of plastic material (MP); and
- one or more heating elements (40-1, 40-2), supported by said second intermediate support plate (22), movable, said one or more heating elements (40-1, 40-2) being additional with respect to the heating means having the function of keeping hot and in temperature the injection nozzle (30) integrated in said bottom plate (21), fixed, of the mold (20);
wherein the method comprises the following steps, during each molding cycle (20) of the mold (20):
- moving and spacing (f1, D1) said second intermediate support plate (22), supporting said one or more heating elements (40-1, 40-2), and said core (25) of the mold (20) consisting of said third intermediate molding plate (23) and said support block (24), all together, closed in a packet against each other, from said first bottom plate (21), fixed, integrating the injection nozzle (30), upon opening the mold (20) and before extracting the molded piece (PZ) of plastic material from the mold (20), so as to separate said first bottom plate (21), fixed, at a higher temperature, and said second intermediate support plate (22) together with said core (25), at a lower temperature
- moving and spacing (f2, D2) the core (25) of the mold (20), consisting of said third intermediate molding plate (23) and said support block (24), from said second intermediate support plate (22), after the component or molded piece (PZ) of plastic material (MP) has cooled, so as to prepare said core (25) for the extraction from the mold (20) of the component or molded piece (PZ) of plastic material (MP);
- moving and spacing (f3, D3) said third intermediate molding plate (23), with the component or molded piece (PZ) of plastic material (MP), from said support block (24), so as to extract from the mold (20) the component or molded piece (PZ) of plastic material (MP); and
- moving and coupling (f4), during each molding cycle carried out by the mold (20) and after the second intermediate support plate (22) has been moved and spaced apart (f1, D1), integrally with the core (25, 23, 24) of the mold (20), from the first fixed bottom plate (21), said one or more heating elements (40-1, 40-2) with the injection nozzle (30), integrated in the first bottom plate (21), in order to keep it stably in temperature and therefore prevent it from cooling down during the molding cycle carried out by the mold (20),
whereby the method allows a faster cooling of the core (25, 23, 24) of the mold (20) and also of the component or piece (PZ) of plastic material (MP), once molded, thanks to the circulation of air in the separation space separation (D1) between the first fixed bottom plate (21) and the second intermediate support plate (22), movable, of the mold (20), thus correspondingly reducing the time of the molding cycle, carried out by the mold (2 ), to mold the component or piece (PZ) of plastic material (MP), and, moreover, thanks to the intervention of said one or more heating elements (40-1, 40-2), ensures that the injection nozzle (30) be kept warm and in temperature, without cooling, during each molding cycle carried out by the mold (20), obtaining in both cases an increase of the thermal efficiency of the mold (20).

10. Method for increasing the thermal efficiency of a hot runner mold (20) according to claim 9, wherein the mold (20) includes only two heating elements (40-1, 40-2), supported by said intermediate support plate (22), said two heating elements (40-1, 40-2) being suitable for coupling, from diametrically opposite sides, with the injection nozzle (30), integrated in the bottom plate (21), fixed, to keep it stably in temperature and therefore prevent it from cooling during each molding cycle (CS), carried out by the mold (20), of the component or piece (PZ) of plastic material (MP);
wherein the method further comprises the following steps during each molding cycle (CS) of the mold (20):
- moving (f4) each of the two heating elements (40-1, 40-2) from a remote position to a close position, with respect to said injection nozzle (30), to engage and couple with it the heating element (40 -1, 40-2); and
- moving each of the two heating elements (40-1, 40-2) from said close position to said remote position, to disengage and uncouple the heating element (40-1, 40-2) from the injection nozzle (30).

## Patentansprüche

1. Presse (PR) zum Spritzgießen von Kunststoffmaterial (MP), umfassend eine Heißkanalform (20), die in die Presse (PR) integriert ist und ihrerseits ein Bewegungssystem (10) der Platten und Teile der Heißkanalform (20) umfasst, ausgelegt zur Verbesserung und Steigerung des Gesamtwärmewirkungsgrads der Form (20), wobei die Form (20) Folgendes umfasst:
- eine erste Bodenplatte (21), die fest ist, integral mit einer Struktur oder einem festen Teil (PR') der Presse (PR) verbunden ist;
- eine zweite Zwischenstützplatte (22), die in Bezug auf die anderen Teile und Platten (21, 25) der Form (20) beweglich ist;
- einen beweglichen Kern (25), bestehend aus:
- einer dritten Zwischenformplatte (23), die an die zweite Zwischenstützplatte (22) angrenzt und wie diese in Bezug auf die anderen Teile und Platten der Form (20) beweglich ist, wobei die dritte Zwischenformplatte (23) geeignet ist, das Kunststoffmaterial (MP) im geschmolzenen Zustand aufzunehmen, um während eines entsprechenden Formzyklus (CS), der von der Form (20) ausgeführt wird, ein Bauteil oder Werkstück (PZ) aus Kunststoffmaterial (MP) zu formen; und
- einem beweglichen Stützblock (24), um die dritte Zwischenformplatte (23) zu stützen;
- eine Einspritzvorrichtung oder -düse (30) vom Heißkanaltyp, die in die erste Bodenplatte (21), die fest ist, integriert ist, wobei die Einspritzdüse (30) während des von der Form (20) ausgeführten Formzyklus (CS) in der Lage ist, das Kunststoffmaterial (MP) im geschmolzenen Zustand in einen Hohlraum einzuspritzen, der in der dritten Zwischenformplatte (23) des Kerns (25) der Form ausgebildet ist, um das Bauteil oder Werkstück (PZ) aus Kunststoffmaterial (MP) zu formen; und
- ein oder mehrere Heizelemente (40-1, 40-2), die von der zweiten Zwischenstützplatte (22) gestützt werden, die beweglich sind, wobei das eine oder die mehreren Heizelemente (40-1, 40-2) zusätzlich zu den Heizmitteln vorhanden sind, die die Funktion aufweisen, die in der Bodenplatte (21), die fest ist, der Form (20) integrierte Einspritzdüse (30) warm und auf Temperatur zu halten;
wobei das in der Form (20) implementierte Bewegungssystem (10) seinerseits Folgendes umfasst:
- erste Bewegungsmittel (50) zum Bewegen und Beabstanden (f1, D1), beim Öffnen der Form (20), der zweiten Zwischenstützplatte (22), die das eine oder die mehreren Heizelemente (40-1, 40-2) stützt, zusammen mit dem Kern (25, 23, 24) in einer geschlossenen Konfiguration, wobei die dritte Zwischenformplatte (23) und der Stützblock (24) verschlossen im Paket aneinanderliegen, von der ersten Bodenplatte (21), die fest ist, die die Einspritzdüse (30) integriert, um die beiden Platten (21, 22) voneinander zu trennen, bevor das geformte Werkstück (PZ) aus Kunststoffmaterial (MP) aus derselben Form (20) entnommen wird;
- zweite Bewegungsmittel (60) zum Bewegen und Beabstanden (f2) des Kerns (25) der Form (20), bestehend aus der dritten Zwischenformplatte (23) und dem Stützblock (24), von der Zwischenplattenstütze (22), um das Entnehmen des geformten Werkstücks (PZ) aus Kunststoffmaterial (MP) aus der Form (20) zu ermöglichen, nachdem die erste Bodenplatte (21) und die zweite Zwischenstützplatte (22) mittels der ersten Bewegungsmittel (50) voneinander getrennt und beabstandet (f1) wurden; und
- dritte Bewegungsmittel (70) zum Bewegen und Beabstanden (f3) der dritten Zwischenformplatte (23) mit dem geformten Werkstück (PZ) aus Kunststoffmaterial (MP) vom Stützblock (24), um das geformte Werkstück (PZ) aus Kunststoffmaterial (MP) aus der Form (20) zu entnehmen; und
**dadurch gekennzeichnet, dass**
die Presse (PR) weiter Steuerungsmittel zum Steuern des Bewegungssystems (10) umfasst, so dass nachdem die zweite Zwischenstützplatte (22) mittels der ersten Bewegungsmittel (50) von der ersten festen Bodenplatte (21) wegbewegt und davon beabstandet (f1) wurde, während jedes Formzyklus der Form (20) das eine oder die mehreren Heizelemente (40-1, 40-2) geeignet sind, so bewegt (f4) zu werden, dass sie mit der Einspritzdüse (30) gekoppelt sind, die integral mit dem ersten Boden (21), der fest ist, verbunden ist;
wobei das Bewegungssystem (10) ausgelegt ist, um den Wärmewirkungsgrad der Form (20) zu erhöhen, um eine schnellere Abkühlung des mit dem Kunststoffmaterial (MP) geformten Werkstücks (PZ) zu erhalten, dank der Trennung und Beabstandung, die während des Formzyklus des Werkstücks (PZ) zwischen der ersten festen Bodenplatte (21) und der zweiten beweglichen Zwischenstützplatte (22) auftreten, wodurch eine entsprechende Verkürzung der Zeit des von der Form (20) ausgeführten Formzyklus zum Spritzgießen des Werkstücks (PZ) aus Kunststoffmaterial (MP) ermöglicht wird, und außerdem, aufgrund der Intervention der beiden Heizelemente (40-1, 40-2), um den Bereich der Einspritzdüse (30) warm und auf Temperatur zu halten, damit ein Abkühlen während des Formzyklus des Formteils (PZ) verhindert wird.

2. Presse (PR) zum Spritzgießen von Kunststoffmaterial (MP) nach Anspruch 1, wobei die Einspritzdüse (30), die in die erste Bodenplatte (21), die fest ist, der Form (20) integriert ist, ihrerseits umfasst:
- einen Heißkanal (30a), der zum Aufnehmen und Zuführen des geschmolzenen Kunststoffmaterials (MP) angepasst ist, das in die Form (20) eingespritzt werden soll, um das Werkstück (PZ) aus Kunststoffmaterial (MP) zu formen;
- einen externen Körper (30b), der mit einem oder mehreren elektrischen Widerständen verbunden ist und die Funktion aufweist, den Heißkanal (30a) der Einspritzdüse (30) heiß und auf Temperatur zu halten; und
- eine kreisförmige Membran (30c), die angepasst ist, um das Kunststoffmaterial MP im geschmolzenen Zustand aus dem Heißkanal (30a) der Einspritzdüse (30) aufzunehmen und es kreisförmig und gleichmäßig in dem Hohlraum zu verteilen, der in der dritten Zwischenformplatte (23) des Kerns (25) der Form (20) ausgebildet ist, durch eine kreisförmige Einspritzöffnung oder einen kreisförmigen Einspritzanschluss (30d) derselben Einspritzdüse (30).

3. Presse (PR) zum Spritzgießen von Kunststoffmaterial (MP) nach Anspruch 1 oder 2, wobei die Form nur zwei Heizelemente (40-1, 40-2) einschließt, die von der zweiten Zwischenstützplatte (22) gestützt werden, die beweglich sind, wobei die beiden Heizelemente (40-1, 40-2) geeignet sind, von diametral gegenüberliegenden Seiten mit der Einspritzdüse (30) gekoppelt zu werden, die in der ersten Bodenplatte (21), die fest ist, integriert ist, um diese temperaturstabil zu halten und somit ihr Abkühlen während jedes Formzyklus der Form (20) zu verhindern;
wobei die beiden Heizelemente (40-1, 40-2) angepasst sind, um durch zwei jeweilige Pneumatikzylinder (41-1, 41-2) oder zwei ähnliche Betätigungsvorrichtungen bewegt zu werden, um während jedes Formzyklus der Form (20) mit der Einspritzdüse (30) gekoppelt zu sein.

4. Presse (PR) zum Spritzgießen von Kunststoffmaterial (MP) nach Anspruch 1 oder 2 oder 3, wobei das eine oder die mehrere Heizelemente (40-1, 40-2), die in der Form eingeschlossen sind (20), eine Halbhülsenform aufweisen, die zur Kopplung mit der Außenfläche der Einspritzdüse (30) geeignet ist, und jeweils einen elektrischen Widerstand enthalten, der zur Erzeugung von Wärme angepasst ist.

5. Presse (PR) zum Spritzgießen von Kunststoffmaterial (MP) nach einem der vorstehenden Ansprüche, wenn sie von Anspruch 3 abhängt, wobei weiter Luftkühlmittel zum Kühlen der Pneumatikzylinder mit einem Luftstrom bereitgestellt sind, die angepasst sind, um die beiden in der Form (20) eingeschlossenen Heizelemente (40.1, 40-2) zu bewegen.

6. Presse (PR) zum Spritzgießen von Kunststoffmaterial (MP) nach einem der vorstehenden Ansprüche, wobei weiter Luftkühlmittel zum Kühlen, mit einem Luftstrom, des Bereichs der Einspritzdüse (30) und des geformten Werkstücks (PZ) aus Kunststoffmaterial (MP) nach dessen Formungsphase bereitgestellt sind, um die Trennung und das Ablösen dieser beiden Teile voneinander zu erleichtern.

7. Presse (PR) zum Spritzgießen von Kunststoffmaterial (MP), umfassend eine Heißkanalform (20) mit hohem Wärmewirkungsgrad zum Spritzgießen von Kunststoffmaterial (MP), umfassend:
- eine erste Bodenplatte (21), die fest ist, die integral mit einer Struktur oder einem festen Teil (PR') einer Presse (PR) verbunden ist, in der die Form (20) installiert werden kann oder installiert ist;
- eine zweite Zwischenstützplatte (22), die an die erste Bodenplatte (21) angrenzt und in Bezug auf die anderen Teile und Platten (22, 25) der Form (20) beweglich ist;
- einen beweglichen Kern (25), bestehend aus:
- einer dritten Zwischenformplatte (23), die an die zweite Zwischenstützplatte (22) angrenzt und auch in Bezug auf die anderen Teile und Platten der Form (20) beweglich ist, wobei die dritte Zwischenformplatte (23) einen Hohlraum umfasst, der zur Aufnahme des Kunststoffmaterials (MP) im geschmolzenen Zustand angepasst ist, um während eines entsprechenden Formzyklus (CS), der von der Form (20) ausgeführt wird, ein Bauteil oder Werkstück (PZ) aus Kunststoffmaterial (MP) zu formen; und
- einem beweglichen Stützblock (24), um die dritte Zwischenformplatte (23) zu stützen;
- eine Einspritzvorrichtung oder -düse (30) vom Heißkanaltyp, die in die erste Bodenplatte (21), die fest ist, integriert ist, wobei die Einspritzdüse (30) während des von der Form (20) ausgeführten Formzyklus (CS) in der Lage ist, das Kunststoffmaterial (MP) im geschmolzenen Zustand in den Hohlraum der Form (20) einzuspritzen, der in der dritten Zwischenformplatte (23) eingeschlossen ist, um das Bauteil oder Werkstück (PZ) aus Kunststoffmaterial (MP) zu formen;
- ein oder mehrere Heizelemente (40-1, 40-2), die von der zweiten Zwischenstützplatte (22) gestützt werden, die beweglich sind, wobei das eine oder die mehreren Heizelemente (40-1, 40-2) zusätzlich zu den Heizmitteln vorhanden sind, die die Funktion aufweisen, die in der Bodenplatte (21), die fest ist, der Form (20) integrierte Einspritzdüse (30) warm und auf Temperatur zu halten;
- erste Bewegungsmittel (50), die angepasst sind zum Bewegen und Beabstanden (f1, D1), beim Öffnen der Form (20), der zweiten Zwischenstützplatte (22), die das eine oder die mehreren Heizelemente (40-1, 40-2) stützt, zusammen mit dem Kern (25, 23, 24) in einer geschlossenen Konfiguration, wobei die dritte Zwischenformplatte (23) und der Stützblock (24) verschlossen im Paket aneinanderliegen, von der ersten Bodenplatte (21), die fest ist, die die Einspritzdüse (30) integriert, um die beiden Platten (21, 22) voneinander zu trennen, bevor das geformte Werkstück (PZ) aus Kunststoffmaterial (MP) aus derselben Form (20) entnommen wird;
- zweite Bewegungsmittel (60) zum Bewegen und Beabstanden (f2) des Kerns (25) der Form (20), bestehend aus der dritten Zwischenformplatte (23) und dem Stützblock (24), von der Zwischenplattenstütze (22), die beweglich ist, um das Entnehmen des geformten Werkstücks (PZ) aus Kunststoffmaterial (MP) aus der Form (20) zu ermöglichen, nachdem die erste Bodenplatte (21) und die zweite Zwischenstützplatte (22) mittels der ersten Bewegungsmittel (50) voneinander getrennt und beabstandet (f1) wurden; und
- dritte Bewegungsmittel (70) zum Bewegen und Beabstanden (f3) der dritten Zwischenformplatte (23) mit dem geformten Werkstück (PZ) aus Kunststoffmaterial (MP) vom Stützblock (24), um das geformte Werkstück (PZ) aus Kunststoffmaterial (MP) aus der Form (20) zu entnehmen;
wobei die Einspritzdüse (30), die in der ersten Bodenplatte (21), die fest ist, integriert ist, in der Form (20) eingeschlossen ist, ihrerseits Folgendes umfasst:
- einen Heißkanal (30a), der zum Aufnehmen und Zuführen des geschmolzenen Kunststoffmaterials (MP) durch die Einspritzdüse (30) ausgelegt ist;
- einen externen Körper (30b), der mit einem oder mehreren elektrischen Widerständen verbunden ist und die Funktion aufweist, den Heißkanal (30a) der Einspritzdüse (30) heiß und auf Temperatur zu halten; und
- eine kreisförmige Membran (30c), die angepasst ist, um das Kunststoffmaterial MP im geschmolzenen Zustand aus dem Heißkanal (30a) der Einspritzdüse (30) aufzunehmen und es kreisförmig und gleichmäßig in dem Hohlraum der Form (20) zu verteilen, der in der dritten Zwischenformplatte (23) eingeschlossen ist, durch eine kreisförmige Einspritzöffnung oder einen kreisförmigen Einspritzanschluss (30d) derselben Einspritzdüse (30); und
**dadurch gekennzeichnet, dass**
die Presse (PR) weiter Steuerungsmittel zum Steuern der Form (20) umfasst, so dass, nachdem die zweite Zwischenstützplatte (22) mittels der ersten Bewegungsmittel (50) von der ersten festen Bodenplatte (21) wegbewegt und beabstandet (f1) wurde, während jedes Formzyklus der Form (20) das eine oder die mehreren Heizelemente (40-1, 40-2) so bewegt (f4) werden können, dass sie mit der Einspritzdüse (30) gekoppelt werden, die in den ersten Boden (21), der fest ist, integriert ist;
wobei die ersten, zweiten und dritten Bewegungsmittel (50, 60, 70) angepasst sind, den Wärmewirkungsgrad der Form (20) zu erhöhen, um eine schnellere Abkühlung des Werkstücks (PZ) zu erreichen, sobald dieses mit dem Kunststoffmaterial (MP) geformt ist, dank der Trennung und Beabstandung, die während des Formzyklus des Werkstücks (PZ) zwischen der ersten festen Bodenplatte (21) und der zweiten beweglichen Zwischenstützplatte (22) auftreten, wodurch eine entsprechende Verkürzung der Zeit des von der Form (20) ausgeführten Formzyklus zum Spritzgießen des Werkstücks (PZ) aus Kunststoffmaterial (MP) ermöglicht wird, sowie die beiden Heizelemente (40-1, 40-2) es ermöglichen, den Bereich der Einspritzdüse (30) warm und auf Temperatur zu halten, um ein Abkühlen während des Formzyklus des Werkstücks (PZ) zu verhindern.

8. Presse (PR) zum Spritzgießen von Kunststoffmaterial (MP) nach Anspruch 7, wobei die Form (20) nur zwei Heizelemente (40-1, 40-2) einschließt, die von der zweiten Zwischenstützplatte (22) gestützt werden, die beweglich sind, wobei die beiden Heizelemente (40-1, 40-2) geeignet sind, von diametral gegenüberliegenden Seiten mit der Einspritzdüse (30) gekoppelt zu werden, um diese temperaturstabil zu halten und somit ihr Abkühlen während jedes Formzyklus der Form (20) zu verhindern;
wobei die beiden Heizelemente (40-1, 40-2) angepasst sind, um durch zwei jeweilige Pneumatikzylinder (41-1, 41-2) oder zwei ähnliche Betätigungsvorrichtungen bewegt zu werden, um während jedes Formzyklus der Form (20) mit der Einspritzdüse (30) gekoppelt zu sein.

9. Verfahren zur Steigerung des Wärmewirkungsgrads einer Heißkanalform (20) zum Spritzgießen von Kunststoffmaterial (MP), umfassend:
- eine erste Bodenplatte (21), die fest ist, die integral mit einer Struktur oder einem festen Teil (PR') einer Presse (PR) verbunden ist, in der die Form (20) installiert werden kann oder installiert ist;
- eine zweite Zwischenstützplatte (22), die an die erste Bodenplatte (21) angrenzt und in Bezug auf die anderen Teile und Platten (22, 25) der Form (20) beweglich ist;
- einen beweglichen Kern (25), bestehend aus:
- einer dritten Zwischenformplatte (23), die an die zweite Zwischenstützplatte (22) angrenzt und auch in Bezug auf die anderen Teile und Platten der Form (20) beweglich ist, wobei die dritte Zwischenformplatte (23) angepasst ist, um das Kunststoffmaterial (MP) im geschmolzenen Zustand in einem jeweiligen Hohlraum aufzunehmen, um während eines entsprechenden Formzyklus (CS), der von der Form (20) ausgeführt wird, ein Bauteil oder Werkstück (PZ) aus Kunststoffmaterial (MP) zu formen; und
- einem beweglichen Stützblock (24), um die dritte Zwischenformplatte (23) zu stützen;
- eine Einspritzvorrichtung oder -düse (30) vom Heißkanaltyp, die in die erste Bodenplatte (21), die fest ist, integriert ist, wobei die Einspritzdüse (30) während des von der Form (20) ausgeführten Formzyklus (CS) in der Lage ist, das Kunststoffmaterial (MP) im geschmolzenen Zustand in den Hohlraum der Form (20) einzuspritzen, der in der dritten Zwischenformplatte (23) eingeschlossen ist, um das Bauteil oder Werkstück (PZ) aus Kunststoffmaterial (MP) zu formen; und
- ein oder mehrere Heizelemente (40-1, 40-2), die von der zweiten Zwischenstützplatte (22) gestützt werden, die beweglich sind, wobei das eine oder die mehreren Heizelemente (40-1, 40-2) zusätzlich zu den Heizmitteln vorhanden sind, die die Funktion aufweisen, die in der Bodenplatte (21), die fest ist, der Form (20) integrierte Einspritzdüse (30) warm und auf Temperatur zu halten;
wobei das Verfahren während jedes Formzyklus (20) der Form (20) die folgenden Schritte umfasst:
- Bewegen und Beabstanden (f1, D1) der zweiten Zwischenstützplatte (22), die das eine oder die mehreren Heizelemente (40-1, 40-2) stützt, und des Kerns (25) der Form (20), bestehend aus der dritten Zwischenformplatte (23) und dem Stützblock (24), die zusammen verschlossen im Paket aneinanderliegen, von der ersten Bodenplatte (21), die fest ist, die die Einspritzdüse (30) integriert, beim Öffnen der Form (20) und vor dem Entnehmen des geformten Werkstücks (PZ) aus Kunststoffmaterial aus der Form (20), um die erste Bodenplatte (21), die fest ist, mit höherer Temperatur, und der zweiten Zwischenstützplatte (22) zusammen mit dem Kern (25), mit niedrigerer Temperatur, zu trennen
- Bewegen und Beabstanden (f2, D2) des Kerns (25) der Form (20), bestehend aus der dritten Zwischenformplatte (23) und dem Stützblock (24), von der zweiten Zwischenstützplatte (22), nachdem das Bauteil oder das geformte Werkstück (PZ) aus Kunststoffmaterial (MP) abgekühlt ist, um den Kern (25) für die Entnahme des Bauteils oder des geformten Werkstücks (PZ) aus Kunststoffmaterial (MP) aus der Form (20) vorzubereiten;
- Bewegen und Beabstanden (f3, D3) der dritten Zwischenformplatte (23) mit dem Bauteil oder dem geformten Stück (PZ) aus Kunststoffmaterial (MP) von dem Stützblock (24), um das Bauteil oder das geformte Werkstück (PZ) aus Kunststoffmaterial (MP) aus der Form (20) zu entnehmen; und
- Bewegen und Koppeln (f4), während jedes Formzyklus, der von der Form (20) ausgeführt wird, und nachdem die zweite Zwischenstützplatte (22) bewegt und beabstandet (f1, D1) wurde, integral mit dem Kern (25, 23, 24) der Form (20) von der ersten festen Bodenplatte (21), das eine oder die mehreren Heizelemente (40-1, 40-2) mit der Einspritzdüse (30), die in die erste Bodenplatte (21) integriert ist, um diese stabil auf Temperatur zu halten und somit ein Abkühlen während des Formzyklus, der von der Form (20) ausgeführt wird, zu verhindern,
wobei das Verfahren eine schnellere Kühlung des Kerns (25, 23, 24) der Form (20) und auch des Bauteils oder Werkstücks (PZ) aus Kunststoffmaterial (MP) ermöglicht, sobald diese geformt sind, dank der Luftzirkulation im Trennraum (D1) zwischen der ersten festen Bodenplatte (21) und der zweiten Zwischenstützplatte (22), die beweglich ist, der Form (20), wodurch die Zeit des von der Form (2) ausgeführten Formzyklus zum Formen des Bauteils oder Werkstücks (PZ) aus Kunststoffmaterial (MP) entsprechend reduziert wird, und darüber hinaus dank der Einwirkung des einen oder der mehreren Heizelemente (40-1, 40-2) sichergestellt wird, dass die Einspritzdüse (30) während jedes von der Form (20) ausgeführten Formzyklus warm und auf Temperatur gehalten wird, ohne abzukühlen, wodurch in beiden Fällen eine Steigerung des Wärmewirkungsgrads der Form (20) erhalten wird.

10. Verfahren zur Steigerung des Wärmewirkungsgrads einer Heißkanalform (20) nach Anspruch 9, wobei die Form (20) nur zwei Heizelemente (40-1, 40-2) einschließt, die von der Zwischenstützplatte (22) gestützt werden, wobei die beiden Heizelemente (40-1, 40-2) zur Kopplung, von diametral gegenüberliegenden Seiten aus, mit der Einspritzdüse (30) geeignet sind, die in die Bodenplatte (21), die fest ist, integriert ist, um sie auf einer stabilen Temperatur zu halten und somit zu verhindern, dass sie während jedes von der Form (20) ausgeführten Formzyklus (CS) des Bauteils oder Werkstücks (PZ) aus Kunststoffmaterial (MP) abkühlt;
wobei das Verfahren weiter die folgenden Schritte während jedes Formzyklus (CS) der Form (20) umfasst:
- Bewegen (f4) jedes der beiden Heizelemente (40-1, 40-2) aus einer entfernten Position in eine nahe Position in Bezug auf die Einspritzdüse (30), um das Heizelement (40-1, 40-2) mit dieser in Eingriff zu bringen und zu koppeln; und
- Bewegen jedes der beiden Heizelemente (40-1, 40-2) aus der geschlossenen Position in die entfernte Position, um das Heizelement (40-1, 40-2) von der Einspritzdüse (30) zu lösen und zu entkoppeln.

## Revendications

1. Presse (PR) pour le moulage par injection de matière plastique (MP), comprenant un moule à canaux chauds (20), intégré dans la presse (PR) et comprenant à son tour un système de déplacement (10) des plaques et parties du moule à canaux chauds (20), conçu pour améliorer et augmenter l'efficacité thermique globale du moule (20), dans laquelle ledit moule (20) comprend :
- une première plaque inférieure (21) fixe solidaire d'une structure ou d'une partie fixe (PR') de la presse (PR) ;
- une deuxième plaque de support intermédiaire (22) mobile par rapport aux autres parties et plaques (21, 25) du moule (20) ;
- un noyau mobile (25) constitué de :
- une troisième plaque de moulage intermédiaire (23) adjacente à ladite deuxième plaque de support intermédiaire (22) et également mobile, comme cette dernière, par rapport aux autres parties et plaques du moule (20), ladite troisième plaque de moulage intermédiaire (23) étant adaptée pour recevoir la matière plastique (MP) à l'état fondu afin de mouler un composant ou une pièce (PZ) en matière plastique (MP) au cours d'un cycle de moulage (CS) correspondant réalisé par le moule (20) ; et
- un bloc de support mobile (24) pour supporter ladite troisième plaque de moulage intermédiaire (23) ;
- un dispositif ou buse d'injection (30), de type à canaux chauds, intégré dans ladite première plaque inférieure (21) fixe, ladite buse d'injection (30) étant capable d'injecter pendant le cycle de moulage (CS) réalisé par le moule (20) la matière plastique (MP) à l'état fondu dans une cavité formée dans ladite troisième plaque de moulage intermédiaire (23) du noyau (25) du moule, de manière à mouler le composant ou la pièce (PZ) en matière plastique (MP) ; et
- un ou plusieurs éléments chauffants (40-1, 40-2) supportés par ladite deuxième plaque de support intermédiaire (22), mobiles, lesdits un ou plusieurs éléments chauffants (40-1, 40-2) étant en complément des moyens de chauffage et ayant pour fonction de maintenir chaud et à température la buse d'injection (30) intégrée dans ladite plaque inférieure (21), fixe, du moule (20) ;
dans laquelle ledit système de déplacement (10) mis en œuvre dans le moule (20) comprend à son tour :
- des premiers moyens de déplacement (50) pour déplacer et espacer (f1, D1), lors de l'ouverture du moule (20), ladite deuxième plaque de support intermédiaire (22) supportant lesdits un ou plusieurs éléments chauffants (40-1, 40-2) conjointement avec ledit noyau (25, 23, 24) dans une configuration fermée avec ladite troisième plaque de moulage intermédiaire (23) et ledit bloc de support (24) fermés l'un contre l'autre, par rapport à ladite première plaque inférieure (21), fixe, intégrant la buse d'injection (30), de manière à séparer les deux plaques (21, 22) avant d'extraire la pièce moulée (PZ) en matière plastique (MP) du même moule (20) ;
- des deuxièmes moyens de déplacement (60) pour déplacer et espacer (f2) le noyau (25) du moule (20), constitué de ladite troisième plaque de moulage intermédiaire (23) et dudit bloc de support (24), par rapport audit support de plaque intermédiaire (22), de manière à permettre l'extraction de la pièce moulée (PZ) en matière plastique (MP) du moule (20), après que la première plaque inférieure (21) et la deuxième plaque de support intermédiaire (22) ont été séparées et espacées (f1) l'une de l'autre par lesdits premiers moyens de déplacement (50) ; et
- des troisièmes moyens de déplacement (70) pour déplacer et espacer (f3) ladite troisième plaque de moulage intermédiaire (23), avec la pièce moulée (PZ) en matière plastique (MP), par rapport audit bloc de support (24), de manière à extraire la pièce moulée (PZ) en matière plastique (MP) du moule (20) ; et
**caractérisée en ce que**
la presse (PR) comprend en outre des moyens de commande pour commander ledit système de déplacement (10) de sorte que après que la deuxième plaque de support intermédiaire (22) a été déplacée et espacée (f1) par lesdits premiers moyens mobiles (50), par rapport à la première plaque inférieure fixe (21), pendant chaque cycle de moulage du moule (20), lesdits un ou plusieurs éléments chauffants (40-1, 40-2) puissent être déplacés (f4) de manière à se coupler avec la buse d'injection (30), solidaire de la première plaque inférieure (21) fixe ;
selon laquelle le système de déplacement (10) est conçu pour augmenter l'efficacité thermique du moule (20) afin d'obtenir un refroidissement plus rapide de la pièce (PZ) une fois moulée avec la matière plastique (MP), grâce à la séparation et à l'espacement qui se produisent pendant le cycle de moulage de la pièce (PZ) entre la première plaque inférieure fixe (21) et la deuxième plaque de support intermédiaire (22) mobile, permettant ainsi une réduction correspondante du temps du cycle de moulage réalisé par le moule (20) pour mouler par injection la pièce (PZ) en matière plastique (MP), et également, grâce à l'intervention des deux éléments chauffants (40-1, 40-2) pour maintenir chaud et à température la zone de la buse d'injection (30), afin d'empêcher son refroidissement pendant le cycle de moulage de la pièce (PZ).

2. Presse (PR) pour le moulage par injection de matière plastique (MP) selon la revendication 1, dans laquelle ladite buse d'injection (30), intégrée dans ladite première plaque inférieure (21) fixe du moule (20), comprend à son tour :
- un canal chaud (30a) adapté pour recevoir et alimenter la matière plastique (MP) à l'état fondu à injecter dans le moule (20), afin de mouler la pièce (PZ) en matière plastique (MP) ;
- un corps externe (30b) associé à une ou plusieurs résistances électriques ayant pour fonction de maintenir le canal chaud (30a) de la buse d'injection (30) chaud et à température ; et
- une membrane circulaire (30c) adaptée pour recevoir la matière plastique MP à l'état fondu provenant du canal chaud (30a) de la buse d'injection (30) et pour la répartir de manière circulaire et uniforme dans la cavité formée dans la troisième plaque de moulage intermédiaire (23) du noyau (25) du moule (20) à travers une ouverture ou un orifice d'injection circulaire (30d) de la même buse d'injection (30).

3. Presse (PR) pour le moulage par injection de matière plastique (MP) selon la revendication 1 ou 2, dans laquelle ledit moule n'inclut que deux éléments chauffants (40-1, 40-2) supportés par ladite deuxième plaque de support intermédiaire (22), mobiles, lesdits deux éléments chauffants (40-1, 40-2) étant adaptés pour se coupler, depuis des côtés diamétralement opposés, avec ladite buse d'injection (30) intégrée dans ladite première plaque inférieure (21), fixe, pour la maintenir stable à température et ainsi empêcher son refroidissement pendant chaque cycle de moulage du moule (20) ;
dans laquelle lesdits deux éléments chauffants (40-1, 40-2) sont adaptés pour être déplacés par deux vérins pneumatiques (41-1, 41-2) respectifs ou deux actionneurs similaires, afin de se coupler pendant chaque cycle de moulage du moule (20) avec ladite buse d'injection (30).

4. Presse (PR) pour le moulage par injection de matière plastique (MP) selon la revendication 1 ou 2 ou 3, dans laquelle lesdits un ou plusieurs éléments chauffants (40-1, 40-2) inclus dans ledit moule (20) présentent une forme de demi-manchon adaptée au couplage avec la surface externe de la buse d'injection (30), et chacun d'eux incorpore une résistance électrique adaptée pour générer de la chaleur.

5. Presse (PR) pour le moulage par injection de matière plastique (MP) selon l'une quelconque des revendications précédentes, dans la mesure où elle dépend de la revendication 3, dans laquelle des moyens de refroidissement par air sont en outre prévus pour refroidir avec un flux d'air les vérins pneumatiques adaptés pour déplacer les deux éléments chauffants (40-1, 40-2) inclus dans ledit moule (20).

6. Presse (PR) pour le moulage par injection de matière plastique (MP) selon l'une quelconque des revendications précédentes, dans laquelle des moyens de refroidissement par air sont en outre prévus pour refroidir, avec un flux d'air, la zone de la buse d'injection (30) et de la pièce moulée (PZ) en matière plastique (MP), après la phase de moulage de cette dernière, afin de faciliter la séparation et le détachement entre ces deux parties.

7. Presse (PR) pour le moulage par injection de matière plastique (MP) comprenant un moule à canaux chauds à haute efficacité thermique (20) pour le moulage par injection de matière plastique (MP), comprenant :
- une première plaque inférieure (21) fixe faisant partie intégrante d'une structure ou d'une partie fixe (PR') d'une presse (PR) dans laquelle le moule (20) est installable ou est installé ;
- une deuxième plaque de support intermédiaire (22) adjacente à ladite première plaque inférieure (21) et mobile par rapport aux autres parties et plaques (22, 25) du moule (20) ;
- un noyau mobile (25) constitué de :
- une troisième plaque de moulage intermédiaire (23) adjacente à ladite deuxième plaque de support intermédiaire (22) et également mobile par rapport aux autres parties et plaques du moule (20), ladite troisième plaque de moulage intermédiaire (23) comprenant une cavité adaptée pour recevoir la matière plastique (MP) à l'état fondu afin de mouler un composant ou une pièce (PZ) en matière plastique (MP) au cours d'un cycle de moulage (CS) correspondant réalisé par le moule (20) ; et
- un bloc de support mobile (24) pour supporter ladite troisième plaque de moulage intermédiaire (23) ;
- un dispositif ou buse d'injection (30), du type à canaux chauds, intégré dans ladite première plaque inférieure (21) fixe, ladite buse d'injection (30) étant capable d'injecter pendant le cycle de moulage (CS) réalisé par le moule (20) la matière plastique (MP) à l'état fondu dans la cavité du moule (20) incluse dans ladite troisième plaque de moulage intermédiaire (23), de manière à mouler le composant ou la pièce (PZ) en matière plastique (MP) ;
- un ou plusieurs éléments chauffants (40-1, 40-2) supportés par ladite deuxième plaque de support intermédiaire (22), mobiles, lesdits un ou plusieurs éléments chauffants (40-1, 40-2) étant en complément des moyens de chauffage et ayant pour fonction de maintenir chaud et à température la buse d'injection (30) intégrée dans ladite plaque inférieure (21), fixe, du moule (20) ;
- des premiers moyens de déplacement (50) adaptés pour déplacer et espacer (f1, D1), lors de l'ouverture du moule (20), ladite deuxième plaque de support intermédiaire (22) supportant lesdits un ou plusieurs éléments chauffants (40-1, 40-2) conjointement avec ledit noyau (25, 23, 24) dans une configuration fermée avec ladite troisième plaque de moulage intermédiaire (23) et ledit bloc de support (24) fermés l'un contre l'autre, par rapport à ladite première plaque inférieure (21), fixe, intégrant la buse d'injection (30), de manière à séparer les deux plaques (21, 22) avant d'extraire la pièce moulée (PZ) en matière plastique (MP) du même moule (20) ;
- des deuxièmes moyens de déplacement (60) pour déplacer et espacer (f2) ledit noyau (25) du moule (20), constitué de ladite troisième plaque de moulage intermédiaire (23) et dudit bloc de support (24) par rapport audit support de plaque intermédiaire (22), mobile, de manière à permettre l'extraction de la pièce moulée (PZ) en matière plastique (MP) du moule (20), après que la première plaque inférieure (21) et la deuxième plaque de support intermédiaire (22) ont été séparées et espacées (f1) l'une de l'autre par lesdits premiers moyens de déplacement (50) ; et
- des troisièmes moyens de déplacement (70) pour déplacer et espacer (f3) ladite troisième plaque de moulage intermédiaire (23), avec la pièce moulée (PZ) en matière plastique (MP), par rapport audit bloc de support (24), de manière à extraire la pièce moulée (PZ) en matière plastique (MP) du moule (20) ;
dans laquelle ladite buse d'injection (30), intégrée dans ladite première plaque inférieure (21), fixe, incluse dans le moule (20) comprend à son tour :
- un canal chaud (30a) conçu pour recevoir et alimenter la matière plastique (MP) à l'état fondu à travers la buse d'injection (30) ;
- un corps externe (30b) associé à une ou plusieurs résistances électriques ayant pour fonction de maintenir le canal chaud (30a) de la buse d'injection (30) chaud et à température ; et
- une membrane circulaire (30c) adaptée pour recevoir la matière plastique (MP) à l'état fondu provenant du canal chaud (30a) de la buse d'injection (30) et pour la répartir de manière circulaire et uniforme dans la cavité du moule (20) incluse dans la troisième plaque de moulage intermédiaire (23) à travers une ouverture ou un orifice d'injection circulaire (30d) de la même buse d'injection (30) ; et
**caractérisée en ce que**
la presse (PR) comprend en outre des moyens de commande pour commander ledit moule (20) de sorte que, après que la deuxième plaque de support intermédiaire (22) a été déplacée et espacée (f1) par lesdits premiers moyens de déplacement (50) par rapport à la première plaque inférieure fixe (21) pendant chaque cycle de moulage du moule (20), lesdits un ou plusieurs éléments chauffants (40-1, 40-2) puissent être déplacés (f4) de manière à se coupler avec la buse d'injection (30) intégrée dans la première plaque inférieure (21) fixe ;
selon laquelle les premiers, deuxièmes et troisièmes moyens mobiles (50, 60, 70) sont adaptés pour augmenter l'efficacité thermique du moule (20) afin d'obtenir un refroidissement plus rapide de la pièce (PZ) une fois moulée avec la matière plastique (MP), grâce à la séparation et à l'espacement qui se produisent pendant le cycle de moulage de la pièce (PZ) entre la première plaque inférieure fixe (21) et la deuxième plaque de support intermédiaire (22) mobile, permettant ainsi une réduction correspondante du temps du cycle de moulage réalisé par le moule (20) pour le moulage par injection de la pièce (PZ) en matière plastique (MP), et lesdits deux éléments chauffants (40-1, 40-2) permettent de maintenir la zone de la buse d'injection (30) chaude et à température, afin d'empêcher son refroidissement pendant le cycle de moulage de la pièce (PZ).

8. Presse (PR) pour le moulage par injection en matière plastique (MP) selon la revendication 7, dans laquelle ledit moule (20) n'inclut que deux éléments chauffants (40-1, 40-2) supportés par ladite deuxième plaque de support intermédiaire (22) mobile lesdits deux éléments chauffants (40-1, 40-2) étant adaptés pour se coupler, depuis des côtés diamétralement opposés, avec ladite buse d'injection (30) pour la maintenir à température stable et ainsi empêcher son refroidissement pendant chaque cycle de moulage du moule (20) ;
dans laquelle lesdits deux éléments chauffants (40-1, 40-2) sont adaptés pour être déplacés par deux vérins pneumatiques (41-1, 41-2) respectifs ou deux actionneurs similaires, afin de se coupler pendant chaque cycle de moulage du moule (20) avec ladite buse d'injection (30).

9. Procédé d'augmentation de l'efficacité thermique d'un moule à canaux chauds (20) pour le moulage par injection de matière plastique (MP), comprenant :
- une première plaque inférieure (21) fixe faisant partie intégrante d'une structure ou d'une partie fixe (PR') d'une presse (PR) dans laquelle le moule (20) est installable ou est installé ;
- une deuxième plaque de support intermédiaire (22) adjacente à ladite première plaque inférieure (21) et mobile par rapport aux autres parties et plaques (22, 25) du moule (20) ;
- un noyau mobile (25) constitué de :
- une troisième plaque de moulage intermédiaire (23) adjacente à ladite deuxième plaque de support intermédiaire (22) et également mobile par rapport aux autres parties et plaques du moule (20), ladite troisième plaque de moulage intermédiaire (23) étant adaptée pour recevoir dans une cavité respective la matière plastique (MP) à l'état fondu afin de mouler un composant ou une pièce (PZ) en matière plastique (MP) au cours d'un cycle de moulage (CS) correspondant réalisé par le moule (20) ; et
- un bloc de support mobile (24) pour supporter ladite troisième plaque de moulage intermédiaire (23) ;
- un dispositif ou buse d'injection (30), du type à canaux chauds, intégré dans ladite première plaque inférieure (21) fixe, ladite buse d'injection (30) étant capable d'injecter pendant le cycle de moulage (CS) réalisé par le moule (20) la matière plastique (MP) à l'état fondu dans la cavité du moule (20) incluse dans ladite troisième plaque de moulage intermédiaire (23), de manière à mouler le composant ou la pièce (PZ) en matière plastique (MP) ; et
- un ou plusieurs éléments chauffants (40-1, 40-2) supportés par ladite deuxième plaque de support intermédiaire (22), mobiles, lesdits un ou plusieurs éléments chauffants (40-1, 40-2) étant en complément des moyens de chauffage et ayant pour fonction de maintenir chaud et à température la buse d'injection (30) intégrée dans ladite plaque inférieure (21), fixe, du moule (20) ;
dans lequel le procédé comprend les étapes suivantes lors de chaque cycle de moulage (20) du moule (20) :
- le déplacement et l'espacement (f1, D1) de ladite deuxième plaque de support intermédiaire (22) supportant ledit ou lesdits éléments chauffants (40-1, 40-2) et ledit noyau (25) du moule (20) constitué de ladite troisième plaque de moulage intermédiaire (23) et dudit bloc de support (24) qui sont solidaires et emboîtés par rapport à ladite première plaque inférieure (21) fixe intégrant la buse d'injection (30), lors de l'ouverture du moule (20) et avant l'extraction de la pièce moulée (PZ) en matière plastique du moule (20), de manière à séparer ladite première plaque inférieure (21) fixe à une température plus élevée et ladite deuxième plaque de support intermédiaire (22) ainsi que ledit noyau (25) à une température plus basse.
- le déplacement et l'espacement (f2, D2) du noyau (25) du moule (20) constitué de ladite troisième plaque de moulage intermédiaire (23) et dudit bloc de support (24) par rapport à ladite deuxième plaque de support intermédiaire (22), après que le composant ou la pièce moulée (PZ) en matière plastique (MP) a refroidi, de manière à préparer ledit noyau (25) à l'extraction du moule (20) du composant ou de la pièce moulée (PZ) en matière plastique (MP) ;
- le déplacement et l'espacement (f3, D3) de ladite troisième plaque de moulage intermédiaire (23) avec le composant ou la pièce moulée (PZ) en matière plastique (MP) par rapport audit bloc de support (24), de manière à extraire du moule (20) le composant ou la pièce moulée (PZ) en matière plastique (MP) ; et
- le déplacement et le couplage (f4), pendant chaque cycle de moulage réalisé par le moule (20) et après que la deuxième plaque de support intermédiaire (22) a été déplacée et espacée (f1, D1) solidairement avec le noyau (25, 23, 24) du moule (20) par rapport à la première plaque inférieure fixe (21), desdits un ou plusieurs éléments chauffants (40-1, 40-2) avec la buse d'injection (30), intégrés dans la première plaque inférieure (21), afin de la maintenir à température stable et ainsi l'empêcher de se refroidir pendant le cycle de moulage réalisé par le moule (20),
selon lequel le procédé permet un refroidissement plus rapide du noyau (25, 23, 24) du moule (20) et également du composant ou de la pièce (PZ) en matière plastique (MP) une fois moulé, grâce à la circulation d'air dans l'espace de séparation (D1) entre la première plaque inférieure fixe (21) et la deuxième plaque de support intermédiaire (22) mobile du moule (20), réduisant ainsi de manière correspondante le temps du cycle de moulage réalisé par le moule (2) pour mouler le composant ou la pièce (PZ) en matière plastique (MP) et, de plus, grâce à l'intervention desdits un ou plusieurs éléments chauffants (40-1, 40-2), garantit que la buse d'injection (30) reste chaude et à température, sans refroidir, pendant chaque cycle de moulage réalisé par le moule (20), obtenant dans les deux cas une augmentation de l'efficacité thermique du moule (20).

10. Procédé d'augmentation de l'efficacité thermique d'un moule à canaux chauds (20) selon la revendication 9, dans lequel le moule (20) n'inclut que deux éléments chauffants (40-1, 40-2) supportés par ladite plaque de support intermédiaire (22), lesdits deux éléments chauffants (40-1, 40-2) étant adaptés pour se coupler, depuis des côtés diamétralement opposés, avec la buse d'injection (30) intégrée dans la plaque inférieure (21) fixe pour la maintenir à température stable et ainsi l'empêcher de refroidir pendant chaque cycle de moulage (CS), réalisé par le moule (20), du composant ou de la pièce (PZ) en matière plastique (MP) ;
dans lequel le procédé comprend en outre les étapes suivantes lors de chaque cycle de moulage (CS) du moule (20) :
- le déplacement (f4) de chacun des deux éléments chauffants (40-1, 40-2) depuis une position éloignée à une position proche, par rapport à ladite buse d'injection (30), pour mettre en prise et coupler l'élément chauffant (40-1, 40-2) avec celle-ci ; et
- le déplacement de chacun des deux éléments chauffants (40-1, 40-2) depuis ladite position proche à ladite position éloignée, pour mettre hors prise et découpler l'élément chauffant (40-1, 40-2) de la buse d'injection (30).
